# EUROPEAN PATENT SPECIFICATION

(11) **EP 2 312 839 B1**
(45) Date of publication and mention of the grant of the patent: **22.10.2014**
(21) Application number: 10181958.9
(22) Date of filing: 29.09.2010
(51) Int. Cl.: H04N 21/41, H04N 21/426, H04N 21/433, H04N 21/458, H04N 21/472, G11B 27/32, G11B 27/34, H04N 5/775

(54) **Digital broadcast receiver and recorded-program display method**
Digitaler Radioempfänger und Anzeigeverfahren für aufgezeichnetes Programm
Récepteur de radiodiffusion numérique et procédé d'affichage de programme enregistré

(30) Priority: 30.09.2009 JP 2009228929; 06.07.2010 JP 2010154266
(43) Date of publication of application: 20.04.2011
(60) Divisional application: 13197115.2
(73) Proprietor: Kabushiki Kaisha Toshiba, Minato-ku Tokyo (JP)
(72) Inventor: Ida, Tomotaka, Tokyo (JP); Miyazawa, Akira, Tokyo (JP); Kuwahara, Kazuki, Tokyo (JP)
(74) Representative: HOFFMANN EITLE

(56) References cited:
- EP-A2- 1 107 588
- EP-A2- 1 821 535
- JP-A- 2006 033 708
- US-A1- 2002 009 283
- US-A1- 2006 020 627
- US-A1- 2006 020 966
- US-A1- 2006 045 470
- US-A1- 2006 222 326
- US-A1- 2007 201 823

## Description

### BACKGROUND

### 1. Field

Embodiments described herein relate generally to a digital broadcast receiver which can record a program received through a broadcast, and a method of displaying a recorded program.

### 2. Description of the Related Art

Recently, a terrestrial digital broadcast and a BS/CS digital broadcast are fully available, and many programs can be watched at a high image quality and a high sound quality. A digital broadcast is provided with a function of an EPG (Electronic Program Guide). A program list of the day or one week ahead is displayed simply by pressing a button of a remote controller corresponding to the receiver, so that the program content (such as the broadcast time and the cast) is displayed, information search is performed, and a program is reserved to be viewed recorded.

As the number of channels increases, the user may wish to watch a lot more programs, and the broadcast times thereof may be overlapped sometimes. Therefore, for the convenience of the user, a program is recorded and then watched.

For example, JP-2006-033708-A discloses a television program recording and reproducing apparatus has been proposed which includes: a television broadcast receiving portion that receives a television broadcast; a program recording portion that records a record-reserved broadcast program; a recorded-program information recording portion that records the broadcast channel and broadcast time of the program to be recorded by the program recording portion, as recorded-program information; and a display controlling portion that, based on the recorded-program information, performs a process to present a recorded program in a list format in which the broadcast channel and the broadcast time are set to the abscissa and the ordinate, respectively.

JP-2010-028619-A discloses a recorded program list displaying apparatus capable of displaying a program list of the past by omitting a time zone where no program is recorded and by stepwisely enlarging/combining the display unit, in order to reduce the user's labor for reaching a recorded program. Further, the time axis is displayed in different manners between a time zone where a program is recorded and a time zone where a program is not recorded, and a recorded program and a non-recorded program are displayed in different brightness or shading, so that the recorded program is visually explicitly shown in the program list.

In JP-2006-033708-A, a program list is generated based on data of the EPG, and past programs are displayed in the same format with the EPG-based program list. Programs which are not recorded are not displayed, or are displayed in a visually inconspicuous manner. However, display areas are assigned for the non-recorded programs still remain, and hence the limited display area is not effectively used.

In JP-2010-028619-A, while an improvement to reduce the user's labor is made, an improvement to apply the different display manners between a recorded program and a non-recorded program not only on the time axis but on the channel axis and an improvement to apply recorded-program list to a function (referred to as "continuous recording") to record a program of at least one of record-designated channel (or, to "simultaneously" record programs of plural record-designated channels) for plural record-designated time zones are not effectively used.

EP 1 821 535 A2 relates to a recording/reproducing apparatus in which recorded programs are mapped to free channels and automatically played back, when a user selects one of the free channels. The order in which the recorded programs are to be played back on the free channels is stored in an internal program reproducing schedule which is provided to a recorded-program reproducing controller.

US 2006/020627 A1 describes a recorder which includes a storage device for storing recorded audiovisual programs; and a user interface for controlling the recorder. The user interface includes a dedicated "delete" button for deleting data from the recorder. The recorder may also include a "deleted files" folder on the storage device and accessible through the user interface. The "deleted files" folder stores files for which a "delete" command has been made without permanently deleting the files from the storage device.

US 2002/009283 A1 describes a system for recording and/or reproduction of broadcasting programs which permits the facilitation of selection and management of recorded videos. Virtual channels are assigned according to categories defined by a user, and programs corresponding to the categories are recorded into the virtual channels. The recorded programs are set in an array on a time base for simultaneous reproduction on each virtual channel.

US 2007/201823 A1 describes a broadcast program recorder, in which a storage space size required for a broadcast program to be recorded is predicted before recording. The predicted storage space size for the broadcast program and a predicted information on the change in a remaining available storage space, when the broadcast program is recorded, is displayed to a user.

In a digital broadcast receiver having many tuners, and which incorporates a video recording device of large capacity, or to which an external video recording device is connected, plural programs can be simultaneously and continuously recorded. Accordingly, it is desired to set a display state in which recorded programs are efficiently displayed, and to allow the user to easily select the recorded program for watching.

### SUMMARY

One object of the present invention is to provide a digital broadcast receiver and a recorded-program display method in which a program list of recorded programs can be efficiently displayed, and, when a recorded program is to be watched, the user can easily select the recorded program.

The above objects are solved by the subject-matter of the independent claims. Further embodiments are described in the dependent claims.

According to a technical example, there is provided a digital broadcast receiver including: a video recorder configured to record, among a plurality of broadcast programs, subject programs based on record-designation information, the record-designation information designating (i) a plurality of channels and (ii) a plurality of different time zones; and a recorded-program list generator configured to generate a recorded-program list that only displays the subject programs among the plurality of broadcast programs.

According to a technical example, there is further provided a recorded-program display method including: recording, among a plurality of broadcast programs, subject programs based on record-designation information, the record-designation information designating (i) a plurality of channels and (ii) a plurality of different time zones; generating a recorded-program list that only displays the subject programs among the plurality of broadcast programs; and displaying the recorded-program list on a screen of a display device.

According to the claimed subject-matter, a program list of recorded programs can be efficiently displayed, and, when a recorded program is to be watched, the user can easily select the recorded program.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.
Fig. 1 illustrates an example block configuration of a digital broadcast receiver according to an technical example.
Fig. 2 illustrates an example program list.
Fig. 3 illustrates an example recorded-program list.
Figs. 4A and 4B illustrate an example operation flow for recording programs.
Fig. 5 illustrates an example operation flow for generating the recorded-program list and a displaying process.
Fig. 6 illustrates technical example 2 of the recorded-program list.
Fig. 7 illustrates technical example 3 of the recorded-program list.
Fig. 8 illustrates technical example 4 of the recorded-program list.
Fig. 9 illustrates Embodiment 5 of the recorded-program list.
Fig. 10 illustrates technical example 6 of the recorded-program list.
Fig. 11 illustrates technical example 7 of the recorded-program list.
Fig. 12 exemplarily illustrates a mark for indicating an "archive.".
Fig. 13 illustrates technical example 8 of the recorded-program list.
Fig. 14 illustrates technical example 9 of the recorded-program list.
Fig. 15 illustrates an example of an emphasizer in technical example 10 of the recorded-program list.
Fig. 16 illustrates another example of the emphasizer in technical example 10 of the recorded-program list.
Fig. 17 illustrates a further example of the emphasizer in technical example 10 of the recorded-program list.
Fig. 18 illustrates technical example 11 of the recorded-program list.
Fig. 19 illustrates technical example 13 of the recorded-program list.
Fig. 20 illustrates an operation screen to change record setting of a non-record-designated channel.
Fig. 21 illustrates an example of an emphasizer in technical example 14 of the recorded-program list.
Fig. 22 illustrates another example of the emphasizer in technical example 14 of the recorded-program list.
Fig. 23 illustrates a further example of the emphasizer in technical example 14 of the recorded-program list.
Fig. 24 illustrates technical example 15 of the recorded-program list.
Fig. 25 illustrates technical example 17 of the recorded-program list.
Fig. 26 illustrates an operation screen to change record setting of a non-record-designated time zone.
Fig. 27 illustrates technical example 18 of the recorded-program list.
Fig. 28A and 28B illustrate technical example 19 of the recorded-program list.

### DETAILED DESCRIPTION

Hereinafter, embodiments of the invention will be described with reference to the drawings.

### (Technical Example 1)

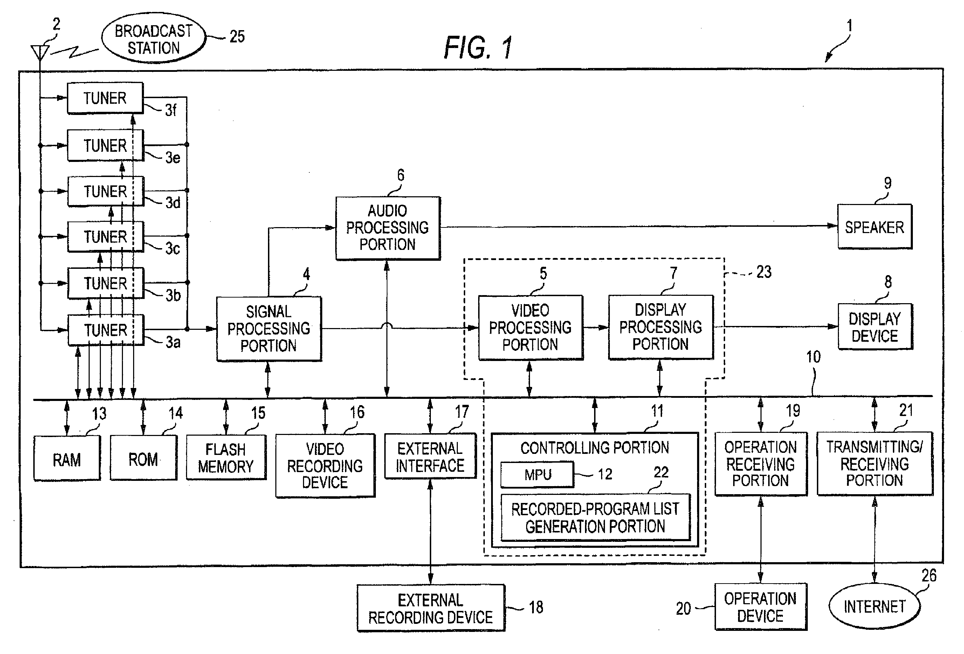

Fig. 1 illustrates an example block diagram of a digital broadcast receiver 1 according to an embodiment. An antenna 2 receives a broadcast radio wave transmitted from a broadcast station 25, and can be used for a terrestrial digital broadcast or a satellite digital broadcast. Tuners 3a to 3f select a broadcast signal of a desired channel from broadcast signals of the terrestrial digital broadcast or the satellite digital broadcast, and demodulate the broadcast signal in accordance with the modulation system of the corresponding digital broadcast. The signal is demodulated to digital video and audio signals by the OFDM (Orthogonal Frequency Division Multiplexing) demodulation in the case of a terrestrial digital broadcast signal, or by the PSK (Phase Shift Keying) demodulation in the case of a satellite digital broadcast signal, and then supplied to a signal processing portion 4.

The signal processing portion 4 selectively applies a given digital signal process on the digital video and audio signals supplied from the tuners 3, and then supplies the signals to a video processing portion 5 and an audio processing portion 6. The signal processing portion 4 has functions of an MPEG (Moving Picture Experts Group) encoder, an MPEG decoder, a video/audio decoder, and the like.

The video processing portion 5 performs the plane management for drawing windows of digital video data supplied from the signal processing portion 4, a data broadcast transferred through a bus, and the GUI (Graphical User Interface), to thereby superimpose the data on the video data, and sends the resulting signal to a display processing portion 7.

The display processing portion 7 converts the signal to the format (the pixel number, the frame frequency, and the scanning method) so as to be displayed on a display device 8, arbitrarily adjusts the display color, and then supplies the resulting signal to the display device 8 to display a video image. The audio processing portion 6 converts the digital audio data supplied from the signal processing portion 4, to an analog audio signal which can be reproduced by a speaker 9, and then supplies the analog audio signal to the speaker 9 to reproduce the sound.

In the digital broadcast receiver 1, the whole operations including the above-described receiving operation are generally controlled by a controlling portion 11. The controlling portion 11 has an MPU (Micro Processing Unit) 12, and controls the components connected to the MPU through a bus 10.

A RAM (Random Access Memory) 13 is a read/write memory which stores various data that are required in the data processing of the controlling portion 11, and functions as a buffer memory which stores video data and the like. A ROM (Read Only Memory) 14 is a read only memory which stores control programs to be executed by the controlling portion 11, and the like.

A flash memory 15 is a nonvolatile semiconductor memory which is rewritable so that data are not erased even when power is switched off. The flash memory 15 has a function of storing data such as various video and audio settings, recording and viewing reservations, and the like which are performed by the user. Data such as a designated channel and a designated time in the recording are temporarily stored into the RAM 13, and then stored into the flash memory 15.

The digital broadcast receiver 1 includes a video recording device 16. The video recording device 16 includes an HDD (Hard Disk Drive), an SSD (Solid State Drive), or the like. The video recording device 16 has an interface portion, and records or reproduces a broadcast program or the like into or from the HDD or the SSD through the interface portion. Programs of plural record-designated channels can be simultaneously recorded into the video recording device 16 for a record-designated time zone.

An external interface 17 is an interface such as USB (Universal Serial Bus), IEEE 1394 (Institute of Electrical and Electronic Engineers 1394), eSATA (external Serial ATA (AT Attachment)), or the like, and an external recording device 18 including a drivers and the like, such as a USB memory, a USB external device, an HDD, an SSD, a CD-R/RW, or a DVD writer is connected to the external interface. A program can be recorded into the external recording device 18 through the external interface 17. The user can selectively use the video recording device 16 or the external recording device 18 for recording.

The copy control may be applied to a digital broadcast. In this case, a program can be recorded only once, and the program cannot be copied but can be moved. The term "move" means changing (moving) of a stored location thereof in an HDD or an SSD. After moving, the program which is recorded in an HDD or an SSD is automatically erased. A program that is called "dubbing 10" in which a program recorded in an HDD or an SSD can be copied nine times and the tenth copy is performed as moving can be copied to another HDD or SSD (including another partition of the same HDD or SSD), or an optical disk such as a DVD. In the technical examples, a process for copying/moving a program recorded in an HDD or SSD of the video recording device 16 or the external recording device 18 to another video recording device or external recording device is referred to as "archive".

An operation receiving portion 19 receives an operation signal which is transmitted from an operation device 20, and transfers the signal to the controlling portion 11. For example, the operation device 20 is a remote controller using wireless communication based on an infrared ray, Bluetooth (trademark), or the like, a wired or wireless keyboard or mouse, or the like, and sends an operation signal. The operation receiving portion 19 receives the operation signal from such a remote controller, a keyboard, or a mouse.

The digital broadcast receiver 1 is connected to the Internet 26 through a transmitting/receiving portion 21. According to the configuration, the digital broadcast receiver 1 can perform information transmission with an apparatus such as a server on the Internet 26 through the transmitting/receiving portion 21.

The controlling portion 11 has a function of a recorded-program list generation portion 22. The digital broadcast receiver 1 has the plural tuners 3, and can designate plural programs to be recorded continuously and simultaneously. That is, the digital broadcast receiver 1 is enabled to perform a "continuous recording" to record a program of at least one record-designated channel (or, to "simultaneously" record programs of plural record-designated channels) for a record-designated time zone. The recorded-program list generation portion 22 generates a recorded-program list of the plural channels (record-designated channels) designated by the user as a subject of recording, and times (record-designated time zones) designated by the user for recording the channels.

Through the EPG-based program list on the screen 8a, the user can select a program to record the program or to reserve recording of the program. The EPG is provided for facilitating the user to select a program in accordance with a recent trend of growing the number of channels. In the digital broadcast receiver 1, the EPG is displayed on the screen 8a of the display device 8, for example, in a similar manner to a television program list in a newspaper. While viewing the program list on the screen 8a, the user may select a program, display detailed information, and reserve recording, by using the remote controller.

The manner of displaying an EPG-based program list is different depending on the manufacturer and type of the broadcast receiver. In this technical example, similarly with the newspaper's television program list, the program list has the horizontal channel axis and the vertical time axis, and programs which are to be broadcasted after the current time are arranged. When a program is selected, there are displayed the title, and broadcast date/time, and also, detailed information such as the cast and the contents may be additionally displayed.

Similarly with the video image and the sound, the EPG data are packetized, and transmitted while multiplexed. Data of program information are contained in the EIT (Event Information Table) of the SI (Service Information). The controlling portion 11 analyzes the information supplied from the signal processing portion 4, and generates a program list. The generated program list is displayed on the screen 8a of the display device 8 by a display controlling portion 23 which is configured by the video processing portion 5, the display processing portion 7, and the controlling portion 11.

For example, the digital broadcast receiver 1 has a recording function in which one or plural channels and the time are designated, and the one or plural record-designated channels are (simultaneously) recorded for the record-designated time zone (referred to as "continuous recording"). The record-designated time zone may be one or plural time zones. A "time zone" means a series of time.

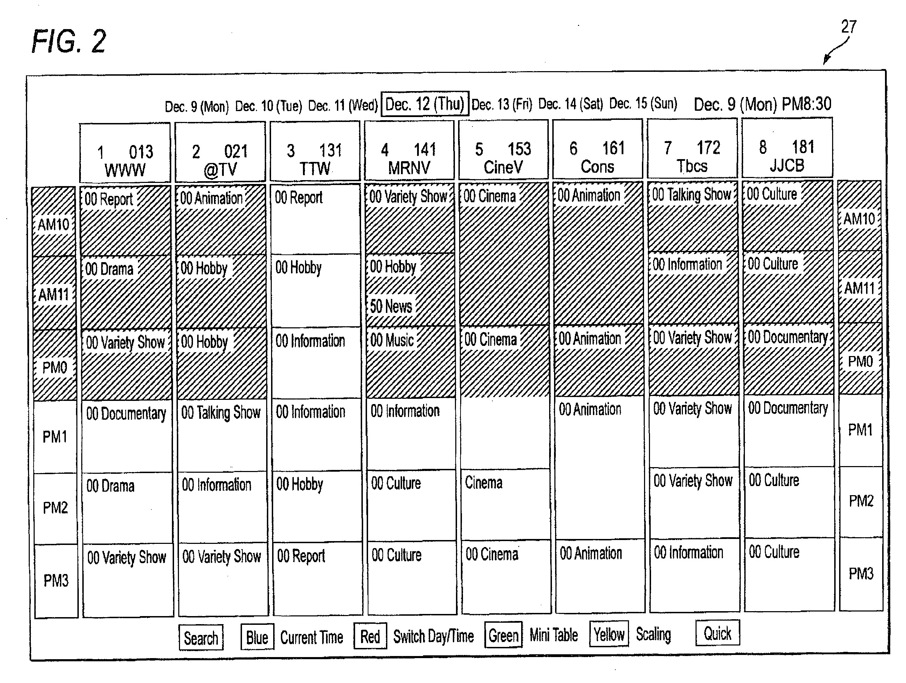

Fig. 2 exemplarily illustrates the EPG-based program list. In the program list 27, recording can be designated for plural channels and plural time zones. In Fig. 2, channels 1, 2, 4, 5, 6, 7 and 8 are designated with a time zone of three hours from 10 A.M. to 1 P.M. of December 12 (Tue.). The record-designated times and channels are changed (hatched) so that the user easily checks the time zone and the channels. Reservation designation can also be performed by changing the date and time, the time zone, and the channel.

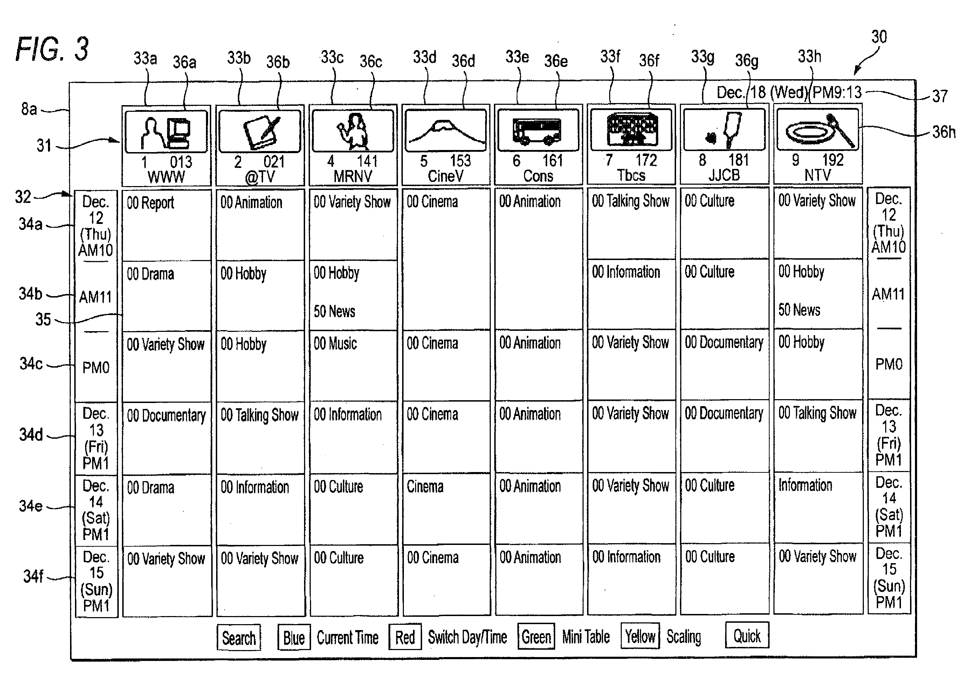

Fig. 3 exemplarily illustrates the recorded-program list. The recorded-program list 30 is displayed on whole the screen 8a of the display device 8, or a part of the recorded-program list may be displayed on a designated range within the screen 8a. In Fig. 3, the list is displayed in a substantially whole of the screen 8a. The recorded-program list 30 is generated by the recorded-program list generation portion 22, and displayed on the screen 8a by the display controlling portion 23.

In the recorded-program list 30, for example, similarly with that of the EPG-based program list, the channel axis 31 indicating a channel is set in the horizontal direction of the screen 8a, and the time axis 32 indicating the time is set in the vertical direction. While the general EPG displays the whole present/future receivable channels along the continuous time period after the current time, the recorded-program list 30 displays recorded programs in accordance with the plural record-designated channels and the record-designated time zones.

In the recorded-program list 30 according to the technical example, only the record-designated channels and the record-designated time zones are displayed. That is, in the recorded-program list 30, only programs having been recorded are displayed. Programs being recorded and programs to be recorded may also be displayed. The record-designated time zone may be one or plural time zones. When several tens of channels are receivable and when all channels including non record-designated channels are displayed in the recorded-program list, a long time is required for the user to search a program to be watched. Further, when the whole program list before the current time is displayed, the display size becomes large as several days or more elapses, and hence the searching operation is cumbersome. Therefore, it is convenient for the user that only record-designated channels and record-designated time zones are displayed in the form of a program list.

In Fig. 3, the record-designated channels are displayed on the channel axis 31, and channel display portions 33a to 33h for eight channels are displayed. When a cursor button of the remote controller is operated, the screen is scrolled right or left, so that other channels which are not displayed on the screen 8a can be viewed.

The record-designated times are displayed on the time axis 32, and time display portions 34a to 34f for six hours are displayed. The time display portion 34a displays a time zone of one hour from 10 A.M. to 11 A.M. of December 12, the time display portion 34b displays a time zone of one hour from 11 A.M. to 0 P.M. of December 12, and the time display portion 34c displays a time zone of one hour from 0 P.M. to 1 P.M of December 12. The time display portions 34a to 34c show the continuous time zone of three hours. The time display portion-34d-displays-a time zone of one hour-from-1 P.M. to 2 P.M. of December 13, the time display portion 34e displays a time zone of one hour from 1 P.M. to 2 P.M. of December 14, and time display portion 34f displays a time zone of one hour from 1 P.M. to 2 P.M. of December 15. When the cursor button of the remote controller is operated, the screen is scrolled up or down, so that other time zones which are not displayed on the screen 8a can be viewed. The time axis 32 is displayed also in the right side of the screen.

In Fig. 3, although only the genre names of programs are described in a program display portion 35 for simplification, the name of a recorded program and brief introduction thereof may be described for each channel and time. The description contents may be the same with that displayed in the EPG-based program list. When a program is recorded, also program information data based on EPG data are simultaneously recorded, and used to generate the recorded-program list 30 in the recorded-program list generation portion 22.

In Fig. 3, thumbnail display portions 36a to 36h are displayed in the channel display portions 33a to 33h. A thumbnail is an image which is reduced in size so that many images are displayed in the form of a list. The image is a motion image or a still image. Immediately after the recorded-program list 30 is displayed on the screen 8a, thumbnails of programs of channels corresponding to the uppermost time display portion 34a are displayed in the thumbnail display portions 36a to 36h.

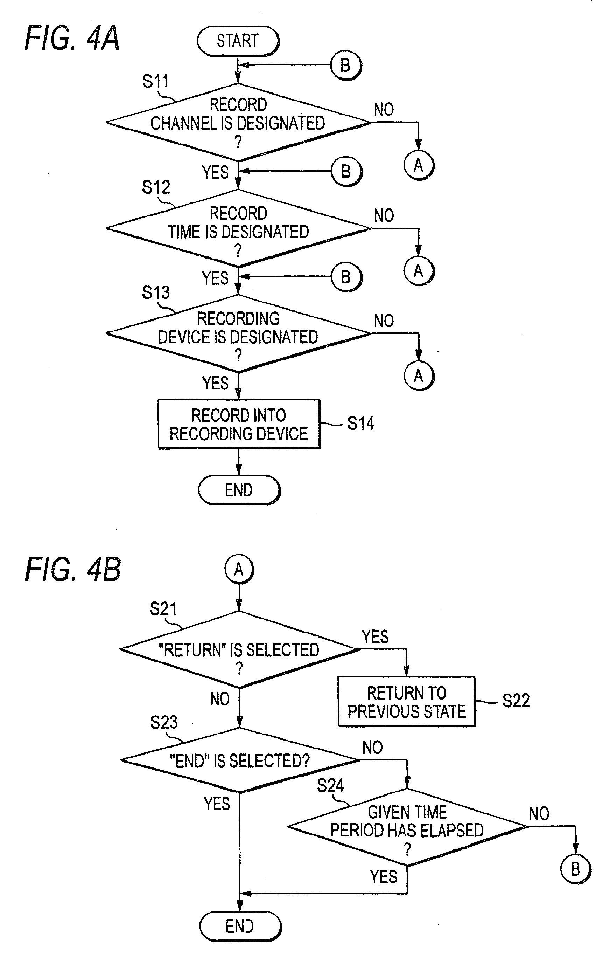

Figs. 4A and 4B exemplarily illustrate the operation flow for recording programs. The operation flow in the case where one or plural channels and a time zone are designated, and one or plural programs of the record-designated channels are (simultaneously) recorded for the record-designated time will be described. In S11 of Fig. 4A, the controlling portion 11 determines whether the user designates a record channel or not. While viewing the program list, the user designates a channel to be recorded, by using the remote controller or the like. The controlling portion 11 receives a signal from the operation receiving portion 19, and sets a record channel.

When a record channel is not designated, the control is transferred to S21 of the operation flow shown in Fig. 4B. In S21, the controlling portion 11 determines whether "RETURN" is selected by using the remote controller or the like or not. If selected, the control is transferred to S22 to return to the previous state. In this case, the previous state means that the state before the recording process is started. If "RETURN" is not selected, the control is transferred to S23 to determine whether '"END" is selected or not. If "END" is selected, the flow is ended. If "END" is not selected, the control is transferred to S24 to determine whether a given time period has elapsed or not. If the given time period has elapsed, the flow is ended. For example, the given time period is set between one minute and two minutes. If the given time period has not elapsed, the control is returned to S11.

In S12, the controlling portion 11 determines whether the user designates the record time or not. When receiving the signal from the operation receiving portion 19, the controlling portion 11 sets the record time. If the record time is not designated, the control is transferred to S21 of the operation flow shown in Fig. 4B. The operations of Fig. 4B have been described above, and hence their description is omitted. If the given time period has not elapsed, the control is returned to S12.

In S13, the controlling portion 11 determines whether the user designates the recording device or not. If designated, the controlling portion 11 sets the video recording device 16 or the external recording device 18 as the recording destination. If not designated, the control is transferred to S21 of the operation flow shown in Fig. 4B. The operations of Fig. 4B have been described above, and hence their description is omitted. If the given time period has not elapsed, the control is returned to S13.

In S14, the controlling portion 11 simultaneously records programs of the plural record-designated channels into the designated recording device for the record-designated time zones.

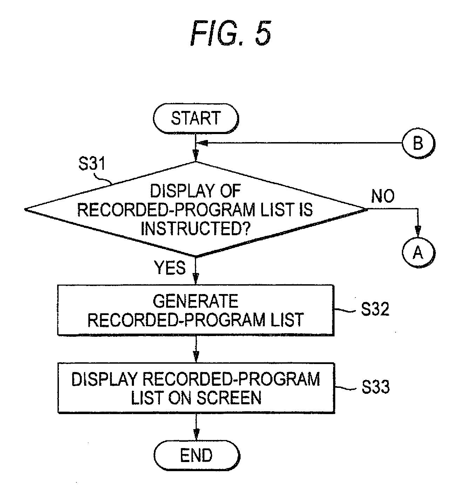

Fig. 5 exemplarily illustrates the operation flow for generating the recorded-program list and the displaying process. In S31, the controlling portion 11 determines whether the user instructs the display of the recorded-program list 30 or not. When receiving a display instructing signal from the operation receiving portion 19, the controlling portion 11 transfers to S32. If the display of the recorded-program list 30 is not instructed, the control is transferred to S21 of the operation flow shown in Fig. 4B. The operations of Fig. 4B have been described above, and hence their description is omitted. If the given time period has not elapsed, the control is returned to S31.

In S32, the recorded-program list generation portion 22 generates the recorded-program list from the data such as the designated channel and the designated time for recording stored in the flash memory 15, the program information recorded in the video recording device 16 or the external recording device 18, and the like. In S33, the display controlling portion 23 displays the recorded-program list on the screen 8a of the display device 8.

### (Technical Example 2)

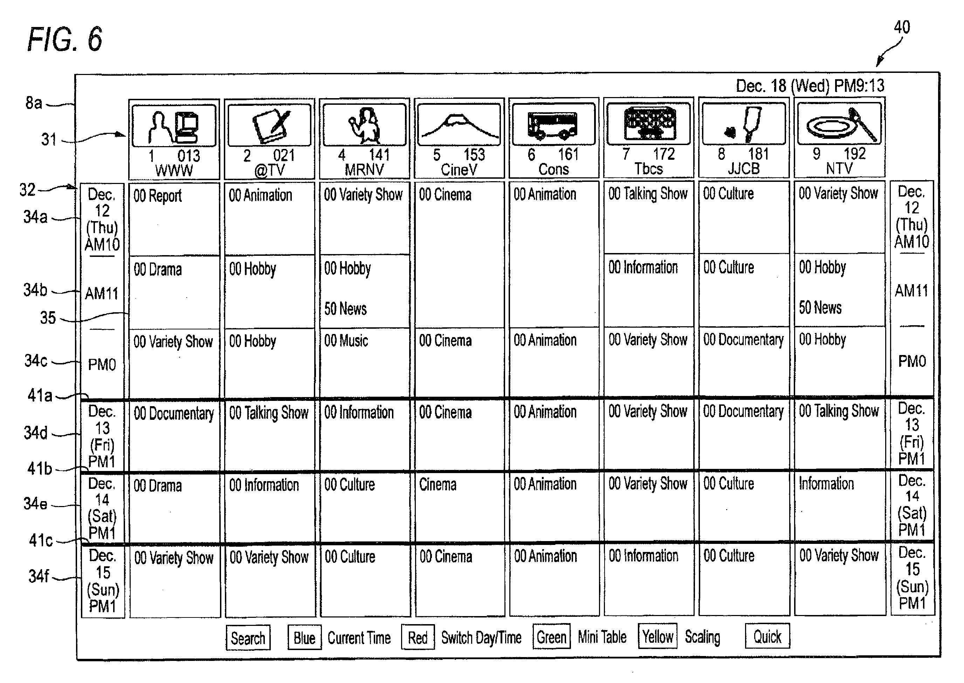

Fig. 6 illustrates technical example 2 of the recorded-program list. A block configuration of a digital broadcast receiver of technical example 2 is identical with that of the digital broadcast receiver 1 of technical example 1 shown in Fig. 1. The technical example is different from technical example 1 shown in Fig. 3 in that, in a recorded-program list 40, the manner of displaying a discontinuous boundary portion between record-designated times on the time axis 32 is changed. In Fig. 6, boundary lines 41a, 41b, 41c are indicated by thick lines of a deep color, so that the user can easily know that the boundaries are discontinuous boundary portions of times. As long as the lines clearly indicate discontinuous boundary portions, the color and thickness of the lines may be arbitrarily set. In place of adding the lines, the background color of the program display portion 35 may be differentiated for each time zone. Also in this case, the discontinuity can be easily known.

### (Technical Example 3)

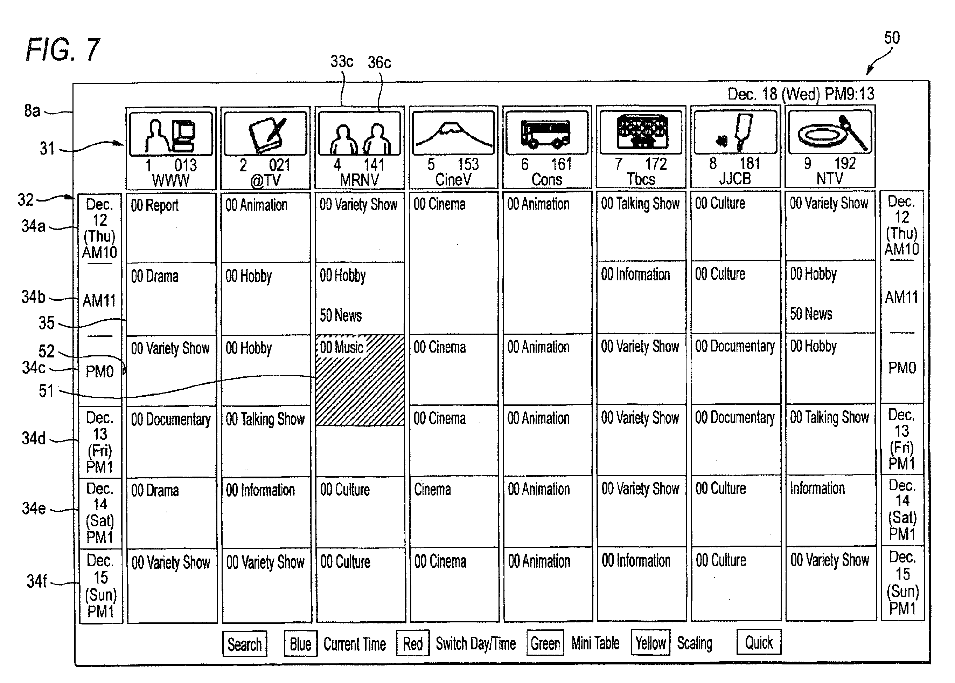

Fig. 7 illustrates technical example 3 of the recorded-program list. A block configuration of a digital broadcast receiver of technical example 3 is identical with that of the digital broadcast receiver 1 of technical example 1 shown in Fig. 1. The technical example is different from technical example 1 shown in Fig. 3 in that, on the time axis, a mark is indicated in the time zone of a record-designated program. In a recorded-program list 50, when the user selects a program 51 in the third time zone from the upper end in the third channel (4 141) from the left, for example, the frame of the program is slightly enlarged and highlighted (hatched), and, on the right side of the time axis 32, a mark 52 is displayed at the position of the program 51 on the time axis. A virtually-retrospective is expressed on the recorded-program list, and the position within the past time zones is clearly indicated, thereby causing the user to be conscious that the user is in virtual date and time which are entirely different from the current time.

In Fig. 7, the mark is triangular. Alternatively, the mark may be displayed in any of various other shapes. When virtual date and time are displayed as they are, the user is more conscious that the user is in virtual date and time. The background color of the time zone may be different from that of other time zones.

When the user selects the program 51, the thumbnail of the thumbnail display portion 36c is switched to that of the program 51. At the other thumbnail display portions than the thumbnail display portion 36c, thumbnails of programs of the channels in the uppermost time display portion 34a are displayed.

### (Technical Example 4)

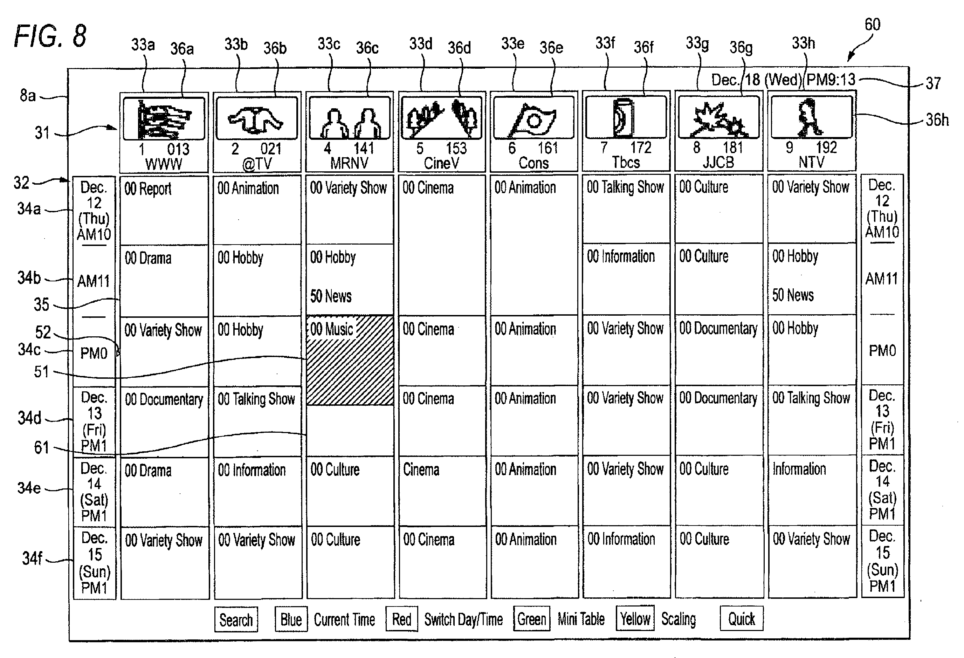

Fig. 8 illustrates technical example 4 of the recorded-program list. A block configuration of a digital broadcast receiver of technical example 4 is identical with that of the digital broadcast receiver 1 of technical example 1 shown in Fig. 1. The technical example is different from technical example 1 shown in Fig. 3 in that, in a recorded-program list 60, when the user selects the program 51 by a cursor operation, not only the thumbnail of the thumbnail display portion 36c, but also the thumbnails of the thumbnail display portions 36a to 36h are switched to those of programs in the same time zone as the program 51. Namely, thumbnail images of programs in the designated time zone on the time axis are displayed. The thumbnails of all programs which are recorded in the same past time zone are displayed, thereby causing the user to be more conscious that the user is in virtual date and time.

In the recorded-program list 60, when the designated program is moved in the direction of the time axis (the vertical direction) by a cursor operation, the thumbnails are continuously switched over in accordance with the vertical movement. When a program 61 is selected, for example, thumbnails of programs in the time zone of the time display portion 34d are displayed for the respective channels. It is very convenient for the user to check pars of the other programs of the same time zone.

### (Embodiment 5)

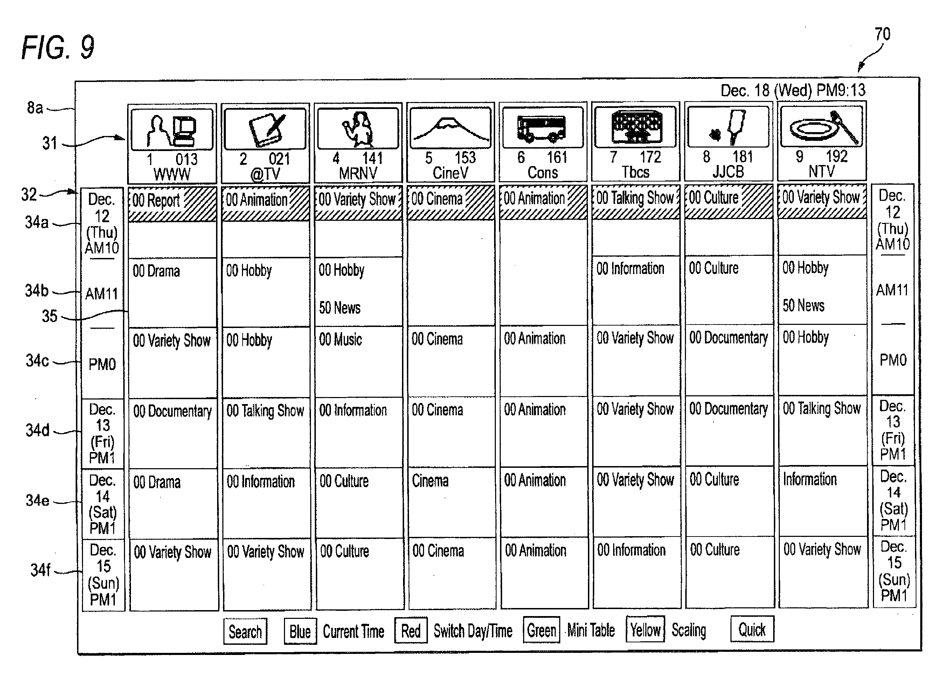

Fig. 9 illustrates Embodiment 5 of the recorded-program list. A block configuration of a digital broadcast receiver of Embodiment 5 is identical with that of the digital broadcast receiver 1 of technical example 1 shown in Fig. 1. The controlling portion 11 automatically erases recorded programs of plural channels in the oldest time zone in order that the storage amount does not exceed the storage capacity of the video recording device 16 or the external recording device 18. In a recorded-program list 70, the portions of programs in the course of erasing are displayed in a different way. As shown in Fig. 9, when the recorded portions in the time zone of the time display portion 34a are being erased, for example, the color of the erased parts (hatched parts) is differentiated from the color of the surrounding, to indicate that the parts are erased. In Fig. 9, a substantially half in the time zone is erased. According to such a display, the user can be easily aware of the programs being erased.

### (Technical Example 6)

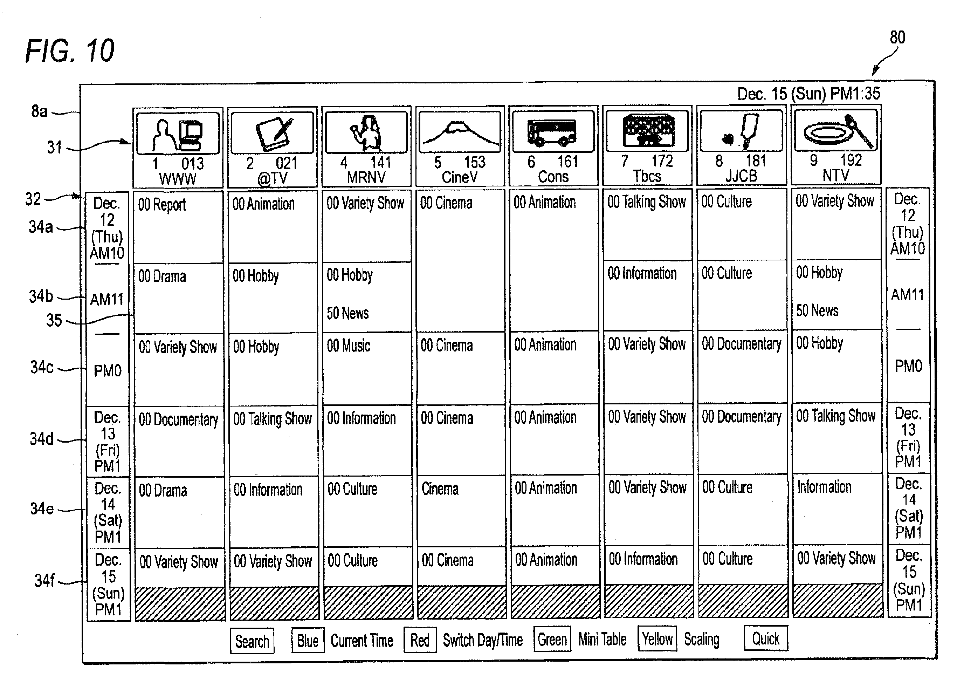

Fig. 10 illustrates technical example 6 of the recorded-program list. A block configuration of a digital broadcast receiver of technical example 6 is identical with that of the digital broadcast receiver 1 of technical example 1 shown in Fig. 1. In a recorded-program list 80, when plural programs in a time zone which is in the course of recording are displayed, the manner of displaying unrecorded parts of the programs is changed. In the recorded-program list 80, unrecorded parts of the programs are displayed in a different way. As shown in Fig. 10, when a part of a recording portion in the time zone of the time display portion 34f has not yet been recorded, for example, the color of the unrecorded parts (hatched parts) is differentiated from the color of the surrounding, to indicate that the parts are unrecorded. In Fig. 10, a substantially half of the recording in the time zone is unrecorded. According to such a display, the user can be easily aware of the programs being recorded.

### (Technical Example 7)

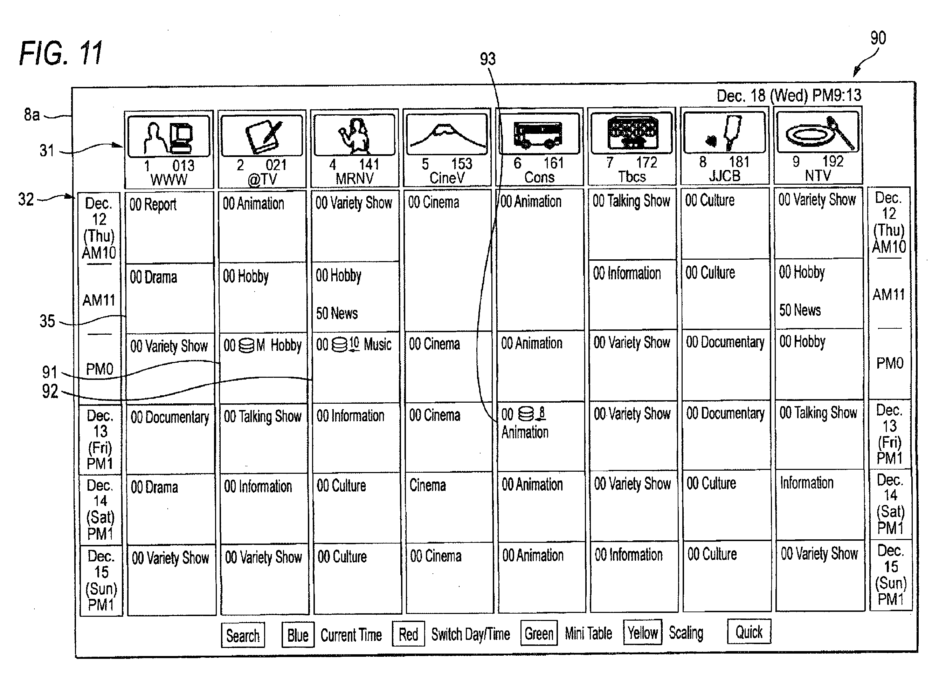

Fig. 11 illustrates technical example 7 of the recorded-program list. A block configuration of a digital broadcast receiver of technical example 7 is identical with that of the digital broadcast receiver 1 of technical example 1 shown in Fig. 1. The process for copying or moving a program recorded in the HDD or SSD of the video recording device 16 or the external recording device 18 to another video recording device or external recording device is referred to as "archive". The "archived program" may be restricted from being reproduced from a recorded-program list 90 or from being further archived. Therefore, by differentiating the archived program from other recording programs, the convenience of the user is improved.

In Fig. 11, in a program 91 in the program display portion 35, the fact that the program has been archived and the contents have been moved is indicated. In a program 92, the fact that the program has been archived and the program is a program of "dubbing 10" is indicated. In a program 93, the fact that the program has been archived and the archive can be performed further eight times is indicated.

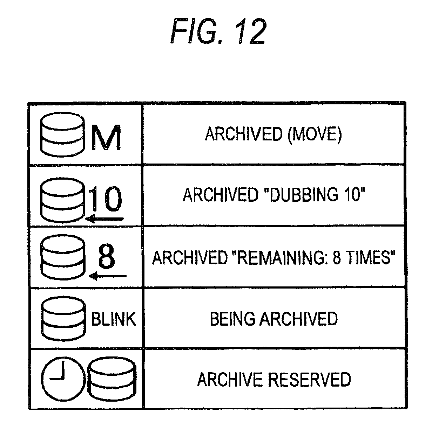

Fig. 12 exemplarily illustrates a mark for indicating the "archive". For example, a disk mark may be set to indicate the archive. The disk mark added with the character M indicates that the relevant program has been archived and moved. The disk mark with the numerals 10 and an arrow indicates that the relevant program has been archived and is a program of dubbing 10. The disk mark with the numeral 8 and an arrow indicates that the relevant program has been archived and the archive can be performed further eight times. When the disk mark blinks, the fact that the relevant program is being archived is indicated. The disk mark with a clock mark indicates that the relevant program is reserved for archive. When a reservation of archive is used, in a case where a storage capacity of the video recording device becomes full, a reserved program is copied/moved to another storage device. Basically, the recorded programs are erased in the order of the recorded time from oldest to newest. By using the reservation of archive, the reserved program is prevented from being inadvertently erased when the storage capacity of the video recording device is full.

The mark is not restricted to the disk mark, and may be arbitrarily set. The mark indicating that a program is being archived may be displayed by changing the color of the mark, or periodically changing the color of the mark, in place of blinking. The mark indicating archive reservation is not restricted to the clock mark, and may be another appropriate mark.

### (Technical Example 8)

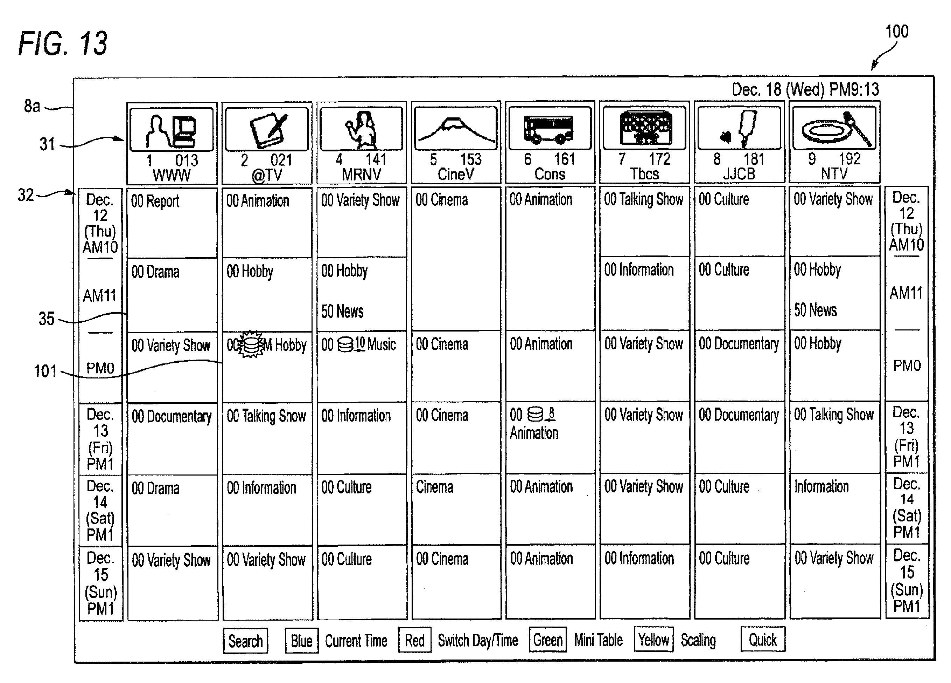

Fig. 13 illustrates technical example 8 of the recorded-program list. A block configuration of a digital broadcast receiver of technical example 8 is identical with that of the digital broadcast receiver 1 of technical example 1 shown in Fig. 1. The "program being archived" may be restricted from being reproduced from a recorded-program list 100 or from being duplicately archived. Therefore, by differentiating such program from other programs, the convenience of the user is improved.

In Fig. 13, with respect to a program 101 in the program display portion 35, a disk mark blinks to indicate that the program is being archived. The mark indicating that a program is being archived may be displayed by changing the color of the mark, or periodically changing the color of the mark, in place of blinking.

### (Technical Example 9)

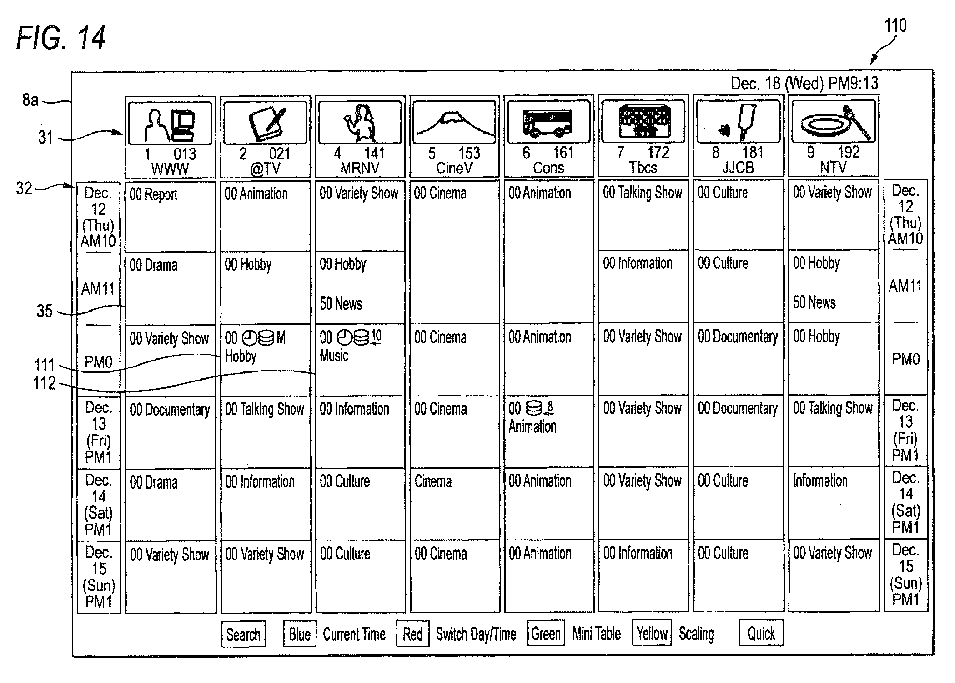

Fig. 14 illustrates technical example 9 of the recorded-program list. A block configuration of a digital broadcast receiver of technical example 9 is identical with that of the digital broadcast receiver 1 of technical example 1 shown in Fig. 1. A "program scheduled to be archived" may be restricted from being reproduced from a recorded-program list 110 or from being duplicately archived. Therefore, by differentiating such program from other programs, the convenience of the user is improved.

In Fig. 14, with respect to a program 111 in the program display portion 35, a clock mark and a disk mark are juxtaposedly displayed to indicate that the program is scheduled to be archived. Also, with respect to a program 112, a clock mark and a disk mark are juxtaposedly displayed to indicate that the program is scheduled to be archived. The mark indicating archive reservation is not restricted to the clock mark, and may be another appropriate mark.

As described above, in the recorded-program list, an "archived program (program having been archived)", a "program being archived" and a "program scheduled to be archived" are indicated for each program so that the user can easily recognize the situation and so that the user can previously know restrictions in such programs.

### (Technical Example 10)

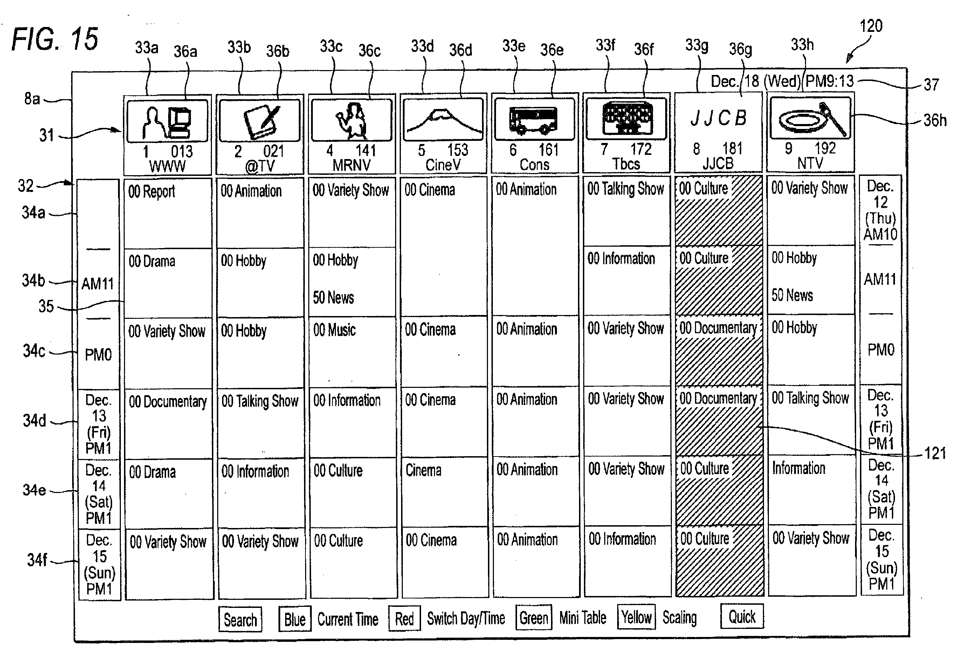

Figs. 15 to 17 illustrate technical example 10 of the recorded-program list. A block configuration of a digital broadcast receiver of technical example 10 is identical with that of the digital broadcast receiver 1 of technical example 1 shown in Fig. 1. In Figs. 15 to 17, portions identical with those of Fig. 3 are denoted by the same reference numerals. In technical example 10, record designation is performed on a channel basis.

Referring to Figs. 15 to 17, the video recording device 16 performs "continuous recording" to (simultaneously) record programs of at least one record-designated channel for a record-designated time zone. A recorded-program list 120 has a channel axis and a time axis, and displays past recorded programs in the continuous recording. In the recorded-program list, also channels not to be recorded are displayed in a similar order and width as an electronic program guide (EPG) of present/future programs, and, in the display, the area of a channel (non-record-designated channel) which is not designated as a record object is emphasized by an emphasizer so as to be distinguishable from that of a channel (record-designated channel) which is designated as a record object.

Hereinafter, the emphasizer in Figs. 15 to 17 will be described.

Fig. 15 shows an example of the emphasizer in technical example 10 of the recorded-program list.

The emphasizer shown in Fig. 15 displays an area which is not designated as a record object, in a dark state in which the brightness is lowered with respect to an area which is designated as a record object, or in a see-through display in which characters and the like indicating programs are displayed in a see-through manner. In the program display portion 35 in Fig. 15, an area 121 of a non-record-designated channel 8 is displayed in a hatched manner, and the thumbnail display portion 36g of the channel 8 is not displayed as a thumbnail, but by a logo of the broadcast station.

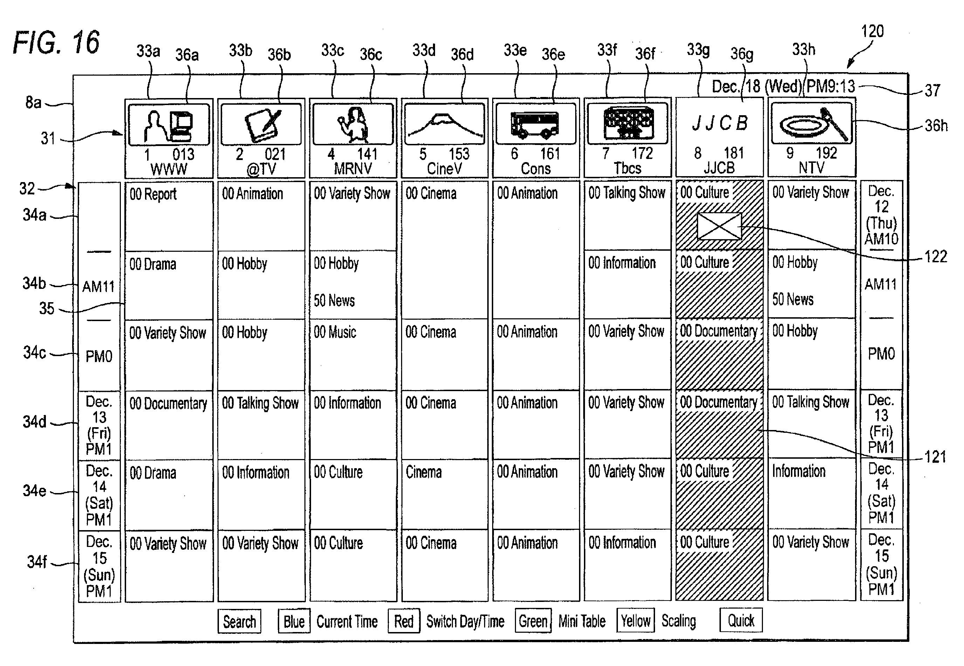

Fig. 16 shows another example of the emphasizer in technical example 10 of the recorded-program list.

The emphasizer shown in Fig. 16 displays the area by an icon 122 indicating that the area is not designated as a record object. In Fig. 16, similarly with Fig. 15, the area 121 of the non-record-designated channel 8 is displayed in a hatched manner, and the thumbnail display portion 36g of the channel 8 is not displayed as a thumbnail, but by a logo of the broadcast station.

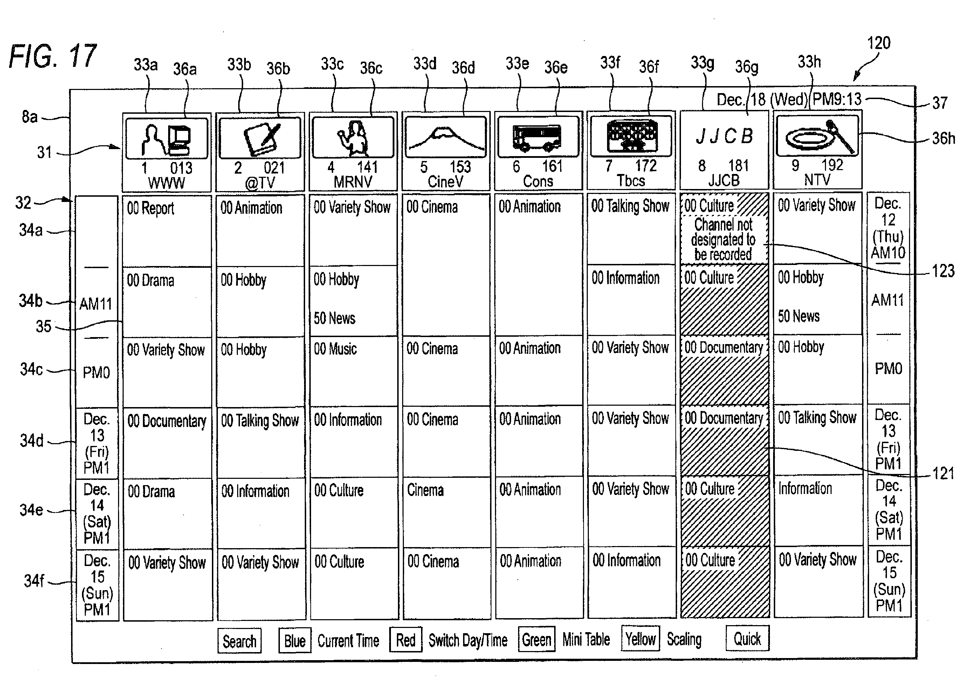

Fig. 17 shows a further example of the emphasizer in technical example 10 of the recorded-program list.

The emphasizer shown in Fig. 17 displays the area by characters 123 indicating that the area is a channel which is not designated to be recorded. In Fig. 17, similarly with Fig. 15, the area 121 of the non-record-designated channel 8 is displayed in a hatched manner, and the thumbnail display portion 36g of the channel 8 is not displayed as a thumbnail, but by a logo of the broadcast station.

### (Technical Example 11)

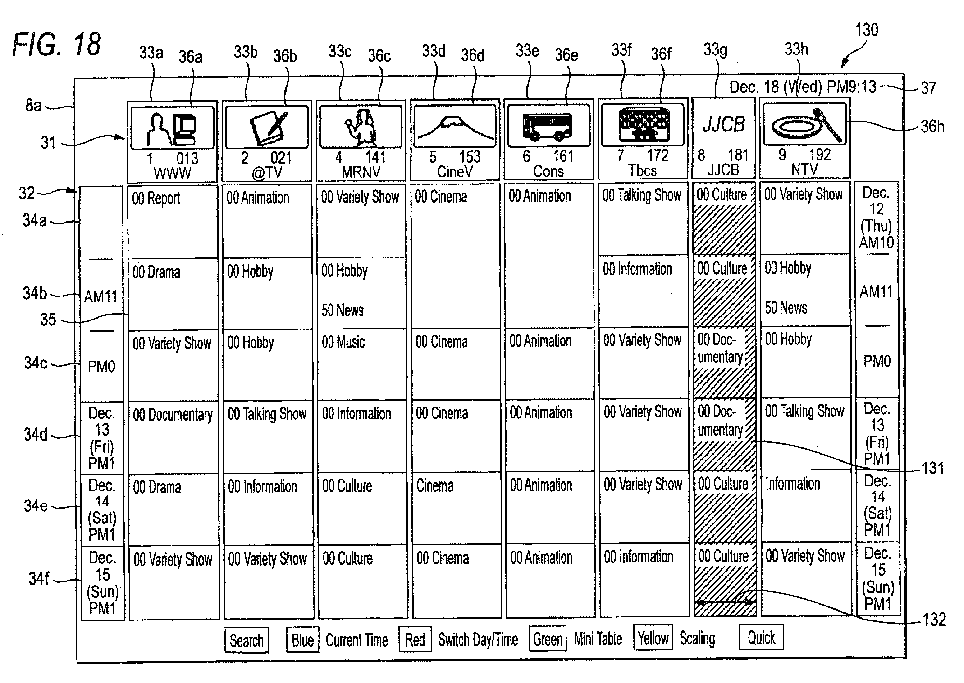

Fig. 18 illustrates technical example 11 of the recorded-program list. A block configuration of a digital broadcast receiver of technical example 11 is identical with that of the digital broadcast receiver 1 of technical example 1 shown in Fig. 1. In Fig. 18, portions identical with those of Fig. 3 are denoted by the same reference numerals.

Referring to Fig. 18, the video recording device 16 performs "continuous recording" to (simultaneously) record programs of at least one record-designated channel for a record-designated time zone. A recorded-program list 130 has a channel axis and a time axis, and displays past recorded programs in the continuous recording. In the recorded-program list, also all channels which are not a record object are displayed in a similar order as an electronic program guide (EPG) of present/future programs, but the width 132 of an area 131 in the direction of the channel axis is compressed to, for example, one half, thereby emphasizing that the area is not designated as a record object. In the program display portion 35 in Fig. 18, similarly with Fig. 15, the area 131 of the non-record-designated channel 8 is displayed in a hatched manner, and the thumbnail display portion 36g of the channel 8 is not displayed as a thumbnail, but by a logo of the broadcast station.

### (Technical Example 12)

Technical example 12 of the recorded-program list is applied to, for example, Figs. 15 to 17. A block configuration of a digital broadcast receiver of technical example 12 is identical with that of the digital broadcast receiver 1 of technical example 1 shown in Fig. 1.

In any one of Figs. 15 to 17, when a cursor located on the recorded-program list 120 is moved in the channel axis 31, selection of a program to be recorded is performed in the following manner. In the area 121 of a channel (in the figure, channel 8) which is not designated as a record object, focusing is not conducted by a cursor operation, and a cursor (not shown) is caused to skip, so that selection of a program to be recorded is disabled. In the area (the area in the program display portion 35 other than the channel area 121) in a channel which is a record object, by contrast, the cursor can select a program to be recorded. Usually, the cursor can be moved by gradually advancing a reversed display of the cursor location in programs. The cursor operation may also be applied to technical example 11 of Fig. 18.

In the technical examples of Figs. 15 to 18, when the cursor is moved in the channel axis 31 in selection of a program to be recorded, therefore, the cursor can be moved while skipping the channel area 121 or 131 which is not designated as a record object, and hence the operability of the cursor can be improved.

### (Technical Example 13)

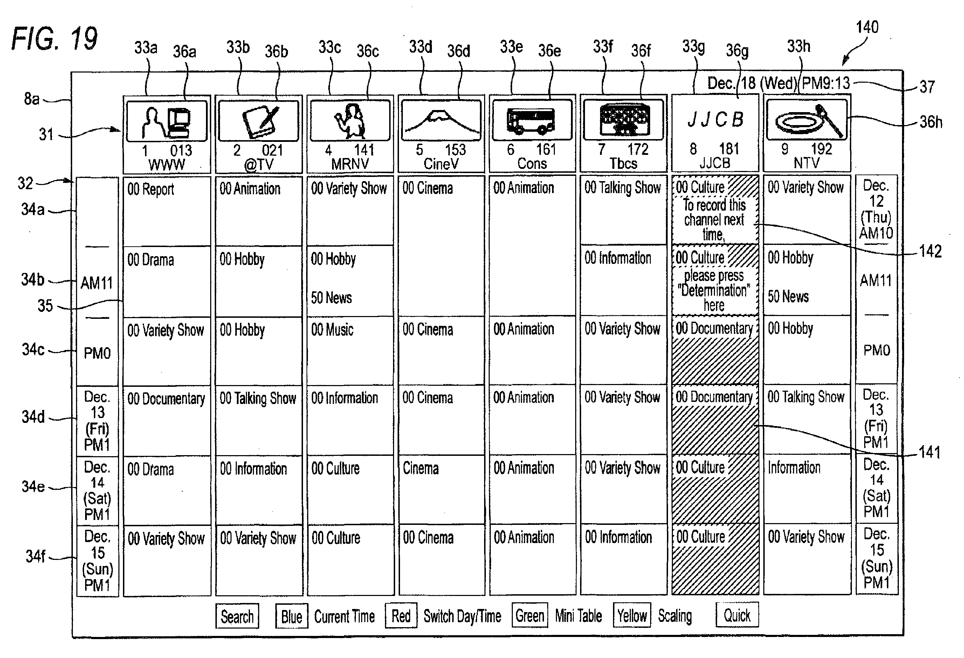

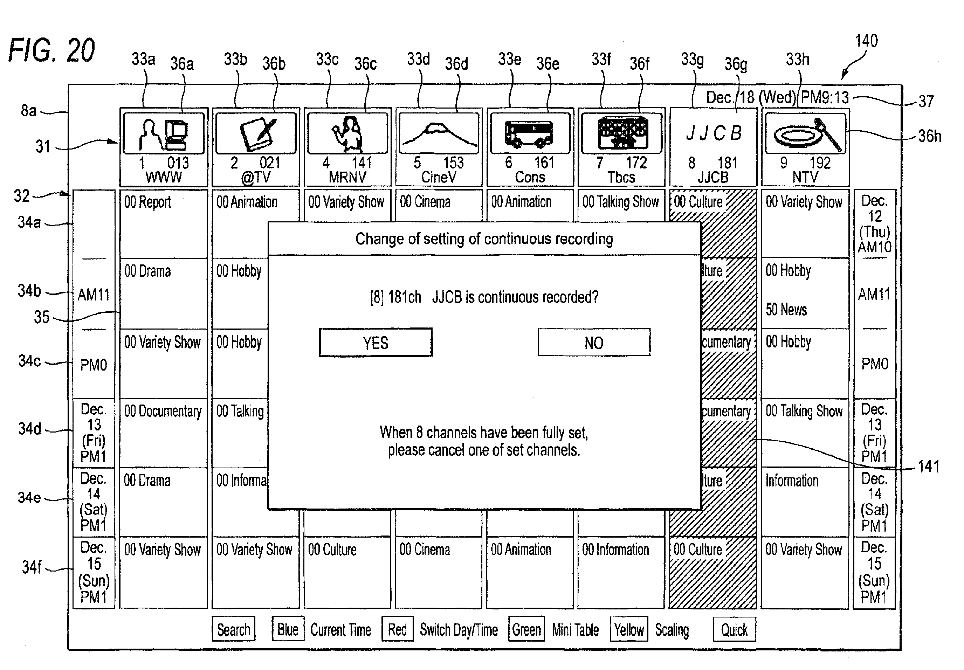

Figs. 19 and 20 illustrate technical example 13 of the recorded-program list.

Fig. 19 shows a recorded-program list, and Fig. 20 shows an operation screen to change record setting of a non-record-designated channel.

In Fig. 19, when the cursor is moved onto a recorded-program list 140 in the channel axis, focusing can be performed by the cursor operation in an area 141 of a channel (for example, channel 8 in the program display portion 35) which is not designated as a record object, and setting can be changed so that the non-record-designated channel is added to record objects. In technical example 13, in the non-record-designated channel area 141, a character display 142 of "When this channel is to be recorded next time, press determination button here" is performed, so that the user can know that a setting change to a record object is enabled.

In the case where, on the recorded-program list 140 of Fig. 19, the cursor is moved in the channel axis to enter the non-record-designated channel area 141 (the hatched portion in the figure), the cursor movement is stopped at the position (i.e., focusing is performed), and a determination button of the operation device 20 such as a remote controller is pressed. Then, an operation screen for changing setting of continuous recording, such as shown in Fig. 20 is displayed, and, with respect to a non-record-designated channel 8, setting change whether the channel is added to objects of continuous recording or not is enabled.

In the technical example, as compared with technical example 12, the cursor operation produces an opposite action. Namely, the cursor can be focused on the non-record-designated channel area 141, without skipping it. According to the configuration, in the operation screen of Fig. 20, setting of a channel can be changed from a non-record object to a record object, through the operation screen of Fig. 20.

### (Technical Example 14)

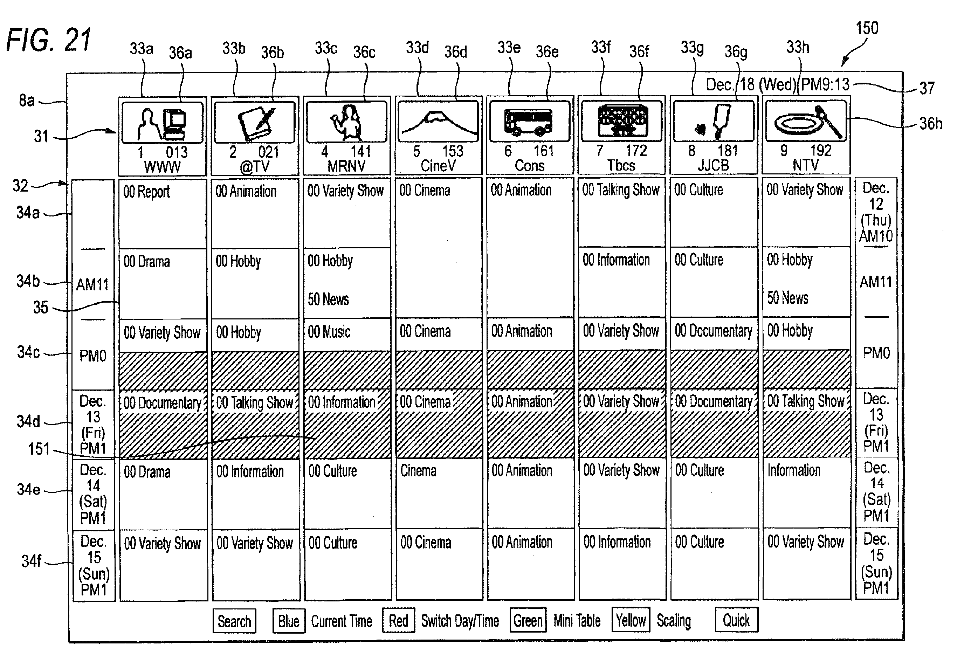

Figs. 21 to 23 illustrate technical example 14 of the recorded-program list. A block configuration of a digital broadcast receiver of technical example 14 is identical with that of the digital broadcast receiver 1 of technical example 1 shown in Fig. 1. In Figs. 21 to 23, portions identical with those of Fig. 3 are denoted by the same reference numerals. In technical example 14, record designation is performed on a time zone basis.

Referring to Figs. 21 to 23, the video recording device 16 performs "continuous recording" to (simultaneously) record programs of at least one record-designated channel for a record-designated time zone. A recorded-program list 150 has a channel axis and a time axis, and displays past recorded programs in the continuous recording. In the recorded-program list, also all time zones which are not designated to be recorded are displayed in a similar order and width as an electronic program guide (EPG) of present/future programs, and an area 151 of time zones which are not designated to be recorded are emphasized by an emphasizer so as to be distinguishable from that of time zones which are designated to be recorded.

Fig. 21 shows an example of the emphasizer in technical example 14 of the recorded-program list.

The emphasizer shown in Fig. 21 displays an area which is not designated as a record object, in a dark state in which the brightness is lowered with respect to an area which is designated as a record object, or in a see-through display in which characters and the like indicating programs are displayed in a see-through manner. In the program display portion 35 in Fig. 21, the area 151 of the non-record-designated time zone is displayed in a hatched manner.

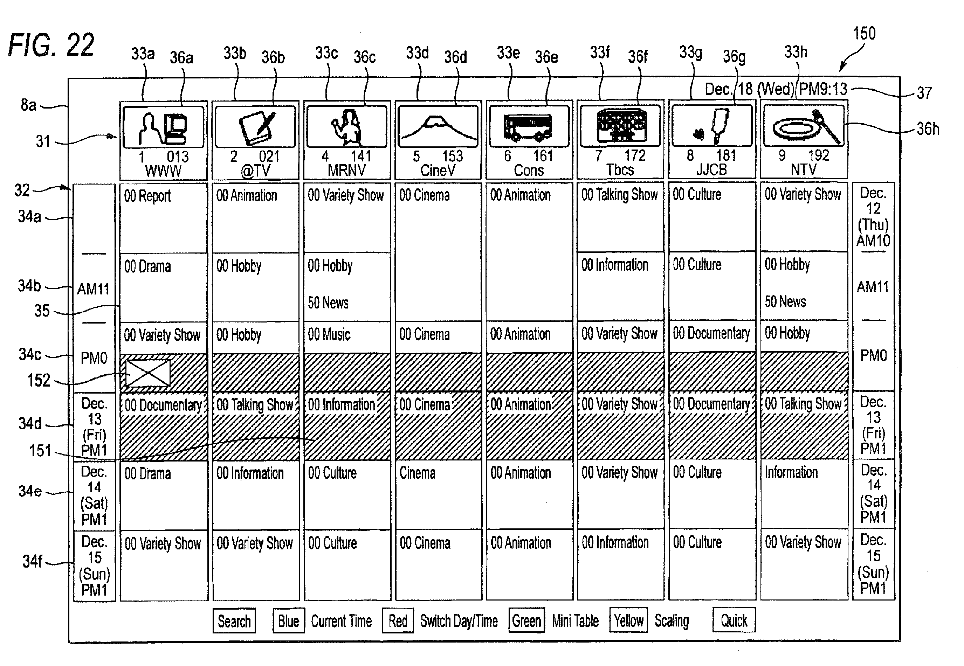

Fig. 22 shows another example of the emphasizer in technical example 14 of the recorded-program list.

The emphasizer shown in Fig. 22 displays the area by an icon 152 indicating that the area is not designated as a record object. In Fig. 22, similarly with Fig. 21, the area 151 of the non-record-designated time zone is displayed in a hatched manner.

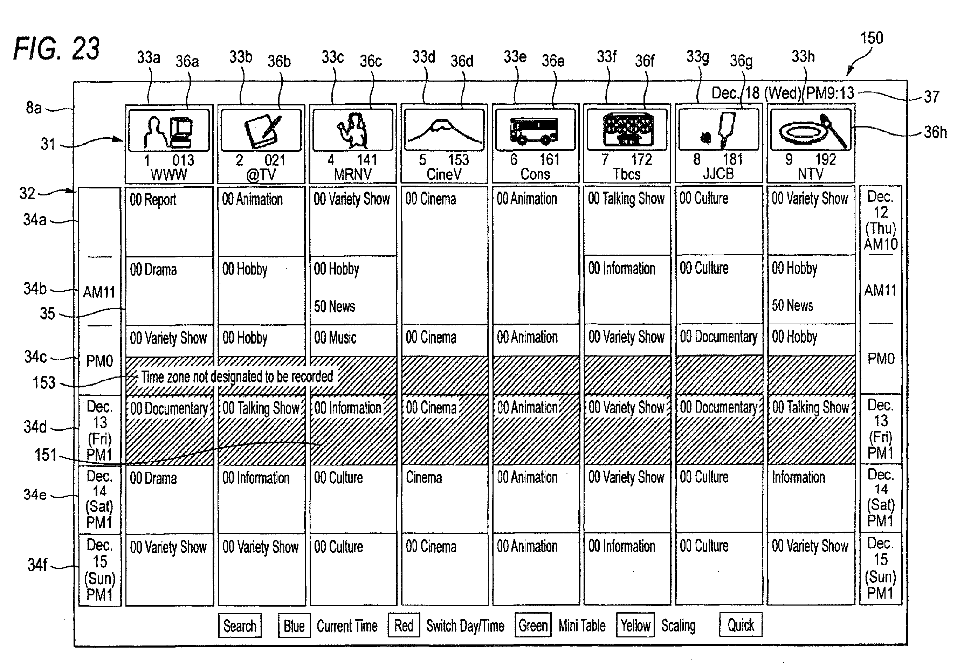

Fig. 23 shows a further example of the emphasizer in technical example 14 of the recorded-program list.

The emphasizer shown in Fig. 23 displays the area by characters 153 indicating that the area is not designated to be recorded. In Fig. 23, similarly with Fig. 21, the area 151 of the non-record-designated time zone is displayed in a hatched manner.

### (Technical Example 15)

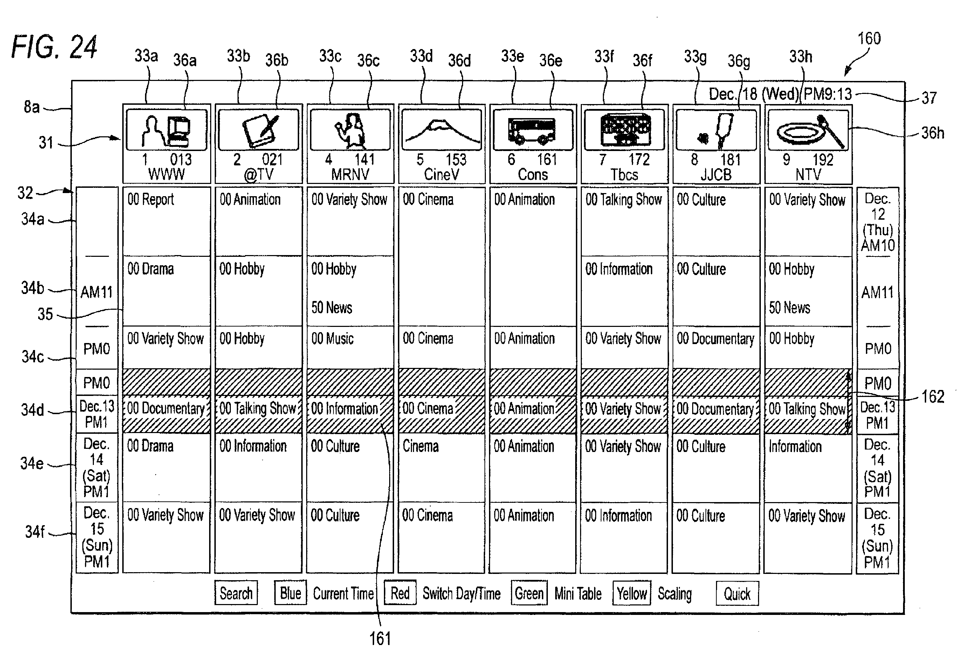

Fig. 24 illustrates technical example 15 of the recorded-program list. A block configuration of a digital broadcast receiver of technical example 15 is identical with that of the digital broadcast receiver 1 of technical example 1 shown in Fig. 1. In Fig. 24, portions identical with those of Fig. 3 are denoted by the same reference numerals.

Referring to Fig. 24, the video recording device 16 performs "continuous recording" to (simultaneously) record programs of at least one record-designated channel for a record-designated time zone. A recorded-program list 160 has a channel axis and a time axis, and displays past recorded programs in the continuous recording. In the recorded-program list, also all time zones which are not a record object are displayed in a similar order as an electronic program guide (EPG) of present/future programs, but the width 162 of an area 161 in the direction of the time axis is compressed to, for example, one half, thereby emphasizing that the time zones are not designated as a record object. In the program display portion 35 in Fig. 24, similarly with Fig. 21, the area 161 of the non-record-designated time zone is displayed in a hatched manner.

### (Technical Example 16)

Technical example 16 of the recorded-program list is applied to, for example, Figs. 21 to 23. A block configuration of a digital broadcast receiver of technical example 16 is identical with that of the digital broadcast receiver 1 of technical example 1 shown in Fig. 1.

In any one of Figs. 21 to 23, when a cursor located on the recorded-program list 150 is moved in the time axis 32, selection of a program to be recorded is performed in the following manner. In the area 151 of a time zone which is not designated as a record object, focusing is not conducted by a cursor operation, and a cursor (not shown) is caused to skip, so that selection of a program to be recorded is disabled. In the area (the area in the program display portion 35 other than the time zone area 151) in a record-designated time zone, by contrast, the cursor can select a program to be recorded. Usually, the cursor can be moved by shifting a reversed display of the cursor location in programs. The cursor operation may also be applied to technical example 15 of Fig. 24.

In the technical examples of Figs. 21 to 24, when the cursor is moved in the time axis 32 in selection of a program to be recorded, therefore, the cursor can be moved while skipping the area 151 or 161 of a time zone which is not designated as a record object, and hence the operability of the cursor can be improved.

### (Technical Example 17)

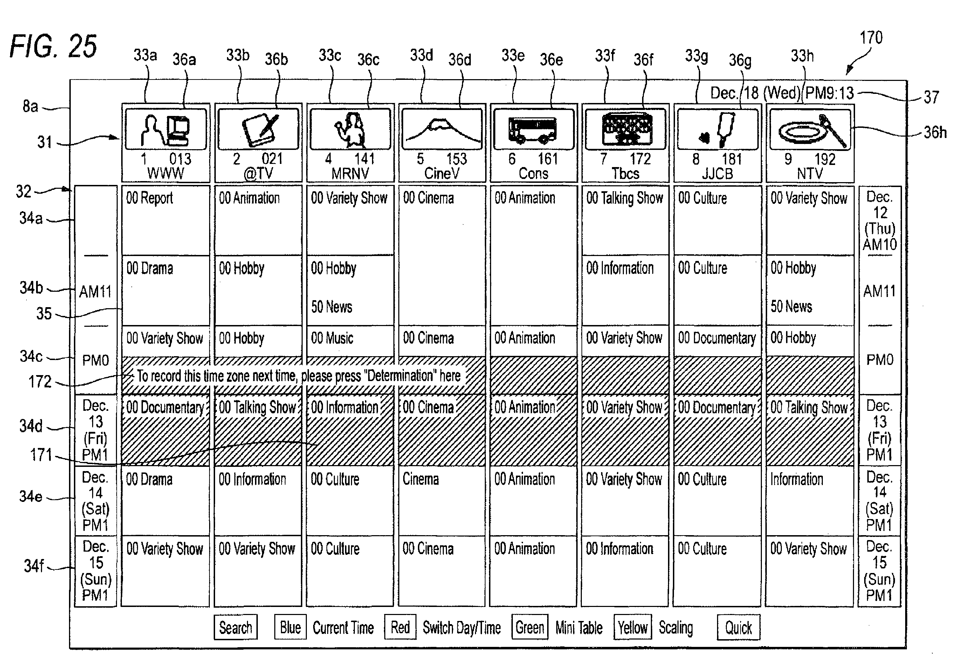

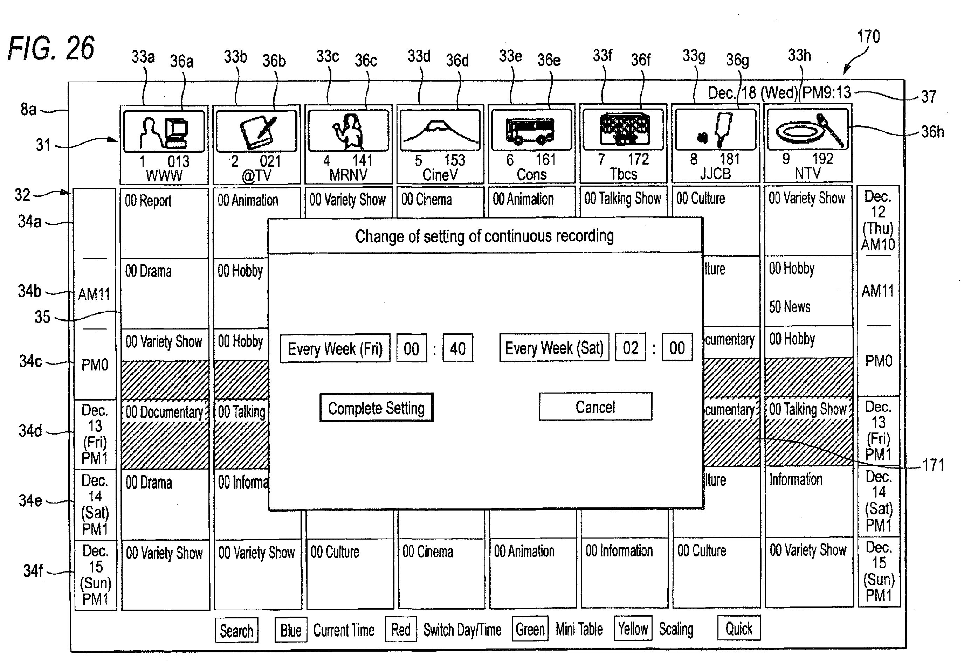

Figs. 25 and 26 illustrate technical example 17 of the recorded-program list.

Fig. 25 shows a recorded-program list, and Fig. 26 shows an operation screen to change record setting of a non-record-designated time zone. A block configuration of a digital broadcast receiver of technical example 17 is identical with that of the digital broadcast receiver 1 of technical example 1 shown in Fig. 1.

In Fig. 25, when the cursor is moved onto a recorded-program list 170 in the time axis, focusing can be performed by the cursor operation in a time zone 171 which is not designated as a record object, and setting can be changed so that the non-record-designated time zone 171 is added to record objects. In technical example 17, in the non-record-designated time zone 171, a character display 172 of "When this time zone is to be recorded next time, press determination button here" is performed, so that the user can know that a setting change to a record object is enabled.

In the case where, on the recorded-program list 170 of Fig. 25, the cursor is moved in the time axis to enter the non-record-designated time zone 171 (the hatched portion in the figure), the cursor movement is stopped at the position (i.e., focusing is performed), and the determination button of the operation device 20 such as a remote controller is pressed. Then, an operation screen for changing setting of continuous recording, such as shown in Fig. 26 is displayed, and, with respect to the non-record-designated time zone, setting change whether the time zone is added to objects of continuous recording or not is enabled.

In the technical example, as compared with technical example 16, the cursor operation produces an opposite action. Namely, the cursor can be focused on the non-record-designated channel area 171, without skipping it. According to the configuration, in the operation screen of Fig. 26, setting of a time zone can be changed from a non-record-designated time zone to a record-designated time zone, through the operation screen of Fig. 26.

### (Technical Example 18)

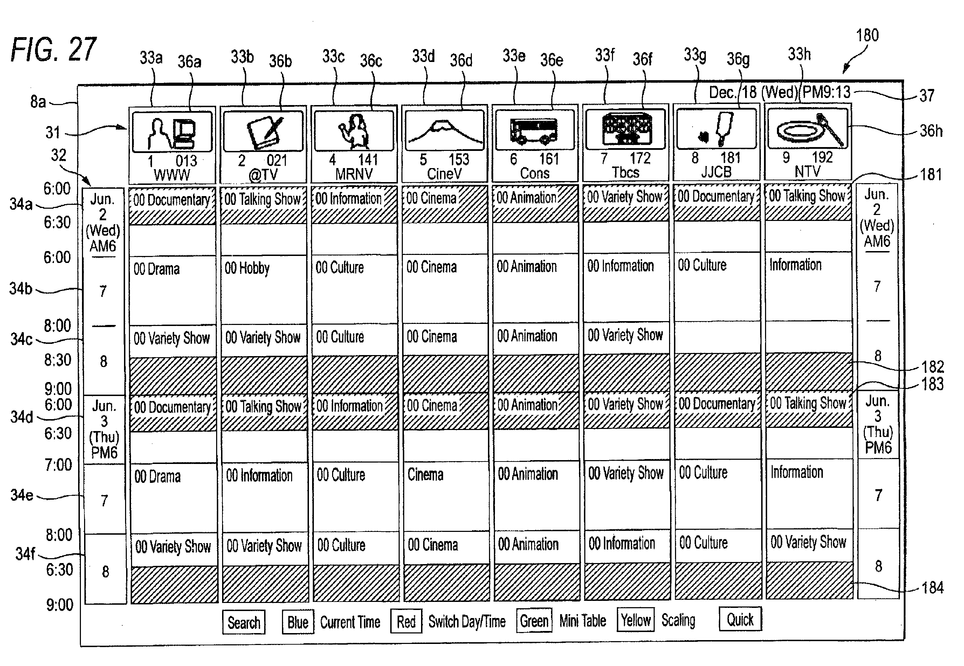

Fig. 27 illustrates technical example 18 of the recorded-program list. A block configuration of a digital broadcast receiver of technical example 18 is identical with that of the digital broadcast receiver 1 of technical example 1 shown in Fig. 1. In Fig. 27, portions identical with those of Fig. 3 are denoted by the same reference numerals.

Referring to Fig. 27, the video recording device 16 performs "continuous recording" to (simultaneously) record programs of at least one record-designated channel for a record-designated time zone. A recorded-program list 180 has a channel axis and a time axis, and displays past recorded programs in the continuous recording. In the recorded-program list, portions in which time zones which are not designated to be recorded are partitioned in an o'clock-hour basis are deleted and set to be undisplayed, and remaining portions which are produced as a result of the deletion and undisplaying due to the partition, and which are shorter than the one hour range are emphasized as areas other than the record-designated time, whereby record-designated areas other than the non-record-designated areas are made distinguishable. As a emphasizing method, for example, portions of areas other than the record-designated time may be darkened as compared with areas of record-designated time zones, or the portions may be displayed in a see-through display.

It is assumed that the same time zone is repeatedly recorded every day, an example case. For example, it is assumed that plural channels are continuously recorded every day while recording of the time zones from 6:30 A.M. to 8:30 A.M. of June 2 (Wed) and June 3 (Thu) is designated. In each of the days in which recording is performed, all the time zones other than that from 6:30 A.M. to 8:30 A.M. are not designated to be recorded. In June 2 (Wed) and June 3 (Thu), the time zone from 8:30 A.M. to 6:30 A.M. of the next day is a non-record-designated time zone. The portions which are obtained by partitioning the non-record-designated time zone in an o'clock-hour basis are deleted and set to be undisplayed, and plural record-designated time zones are continuous with each other. The remaining portions which are produced as a result of the deletion and undisplaying due to the partition, and which are shorter than the one hour range are emphasized as areas other than the record-designated time, whereby the time zones from 6:30 A.M. to 8:30 A.M. which are a record-designated time zone other than the non-record-designated time zones are made distinguishable. Namely, when the non-record-designated time zone from 8:30 A.M. to 6:30 A.M. of the next day is partitioned in an o'clock-hour basis, the time zone includes 21 hours from 9 A.M. to 6 A.M. of the next day. When this time zone is deleted, the remaining portions which are in the non-record-designated time zone, and which are shorter than one hour are a 30-minute portion 182 (hatched portion), a 30-minute portion 183 (hatched portion), a 30-minute portion 181 (hatched portion) in an upper end portion and a 30-minute portion 184 (hatched portion) in a lower end portion, in Fig. 27. The four hatched portions 181 to 184 are emphasized by the above-described emphasizing method.

Technical example 18 is not restricted to the case where the recording is repeatedly performed at the same time zone for every day. The recording may be performed at the same time zone for every week, or at plural time zones in a specific one/plural day.

### (Technical Example 19)

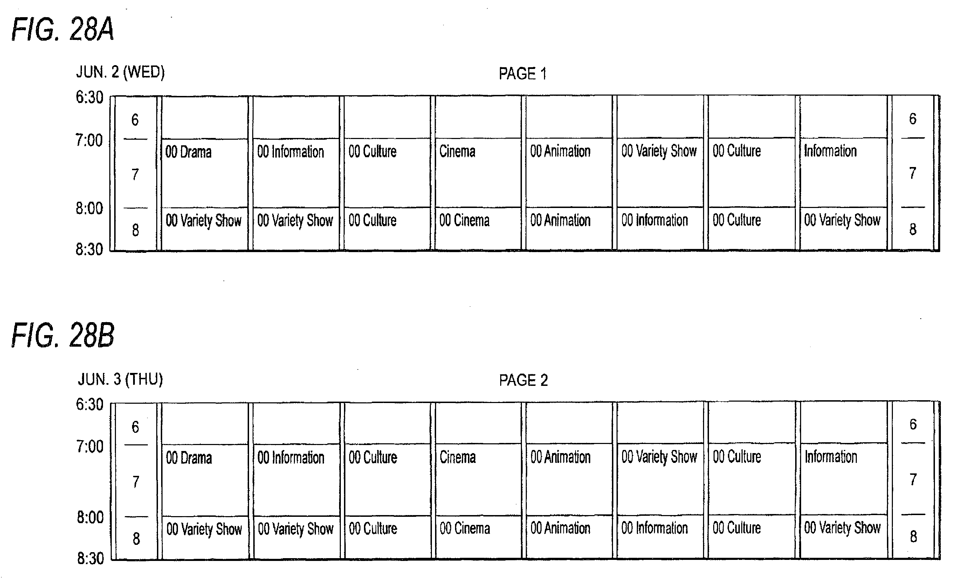

Fig. 28A and 28B illustrate technical example 19 of the recorded-program list. A block configuration of a digital broadcast receiver of technical example 19 is identical with that of the digital broadcast receiver 1 of technical example 1 shown in Fig. 1.

Referring to Fig. 28A and 28B, the video recording device 16 performs "continuous recording" to (simultaneously) record programs of at least one record-designated channel for a record-designated time zone. A plurality (two) of recorded-program lists shown in Fig. 28A and 28B have a channel axis extending in the lateral direction, and a time axis extending in the vertically direction, and display past recorded programs in the continuous recording. In the recorded-program lists, plural record-designated time zones are partitioned in a time zone basis to be formed as separate pages, and the record-designated time zones are displayed by switching the pages.

In technical example 19, a plurality (in Fig. 27, two) of recorded-program lists shown in, for example, the recorded-program list 180 in technical example 18 shown in Fig. 27 are partitioned in a time zone basis to be formed as separate pages, and the plural record-designated time zones are sequentially displayed by switching the pages. The page switching operation is performed by operating the cursor to a switching button or the like which is displayed on the screen. Figs. 28A and 28A show record-designated time zones which are displayed in different pages such as pages 1 and 2, or Fig. 28A shows a record-designated time zone from 6:30 A.M. of June 2 (Wed) to 8:30 A.M., and Fig. 28B shows a record-designated time zone from 6:30 A.M. of June 3 (Thu) to 8:30 A.M.

Similarly with technical example 18, also technical example 19 is not restricted to the case where the recording is repeatedly performed at the same time zone for every day. The recording may be performed at the same time zone for every week, or at plural time zones in a specific one/plural day.

In the general EPG, also non-record-designated channels or time zones are displayed as they are. According to above-described technical examples 15 to 19, in a recorded-program list which is to display a recorded program, particularly when continuous recording is performed and a program list is prepared, it is emphasized that recording of a non-record-designated portion is not designated as a record object, whereby the fact that the portion has no recorded program is emphasized to the user, or the display width is compressed, whereby the fact that there is no recorded program is efficiently displayed. Moreover, a change in which record designation is changed by selecting a non-record-designated channel or time zone can be easily performed. When selection is performed on record-designated programs in the recorded-program list by a cursor operation, the cursor movement skips over a non-record-designated area, and hence the operability of the cursor can be improved. In a recorded-program list for a predetermined number of days, e.g., one day, the number of record-designated time zones is small or the time lengths of the time zones are short so that the record-designated area occupies a small portion in the recorded-program list, a record-designated area other than an area which is used for effectively emphasizing a record-designated time zone is omitted, whereby the selectivity of a recorded program can be improved. Further, only record-designated time zones are extracted, and plural record-designated time zones are formed as different pages, and selectively displayed by switching the pages, whereby the selectivity of a recorded program can be improved.

The scope of the invention is defined by the appended claims. The invention is not restricted to the above-described embodiments as they are, and, in the stage of implementation, the invention can be embodied while the components are modified. By appropriate combinations of plural components disclosed in the embodiments, various inventions can be configured. For example, some of all the components may be omitted, and the components in different embodiments may be combined.

## Claims

1. A digital broadcast receiver (1) comprising a plurality of tuners (3) for continuous and simultaneous recording of a plurality of programs and a video recorder (16) and configured to
record, by use of the video recorder (16) or an external recording device (18), among a plurality of broadcast programs, programs of a plurality of record-designated channels and a record-designated time zone; and
automatically erase portions of the recorded programs which belong to an oldest time zone within the record-designated time zone and to a plurality of the record-designated channels, such that the storage capacity of the video recorder (16) or the external recording device (18) is not exceeded; and
a recorded-program list generator (22) configured to generate a recorded-program list displaying the programs of only the record-designated channels and the record-designated time zone, so that only programs having been recorded and programs being recorded are displayed,
wherein, in the recorded-program list, the portions of erased programs in the course of erasing are differentiated in a display manner, and
wherein, when the portions of programs among the recorded programs are automatically erased, the non-erased portions of the programs in the course of erasing are displayed within the recorded-program list.

2. The digital broadcast receiver (1) of claim 1,
wherein, in the recorded-program list, a part of the recorded programs which has been subjected to copying or moving is differentiated from the other part.

3. The digital broadcast receiver (1) of claim 1,
wherein, when the part of the one program among the recorded program is automatically erased, both of the erased part and the non-erased part of the one program are displayed while being differentiated from each other.

4. The digital broadcast receiver (1) of claim 2,
wherein, in the recorded-program list, in addition to the programs which fall within the record-designated channel, programs which do not fall within the record-designated channel are displayed so as to be differentiated from the programs which fall within the record-designated channel.

5. The digital broadcast receiver (1) of claim 3 or 4, wherein, in the recorded-program list, only part of whole programs which falls within the record-designated time zone is displayed.

6. A recorded-program display method operated in a digital broadcast receiver (1) comprising a plurality of tuners (3) for continuous and simultaneous recording of a plurality of programs, the method comprising:
recording (S14), by use of the video recorder (16) or an external recording device (18), among a plurality of broadcast programs, programs of a plurality of record-designated channels and a record-designated time zone;
automatically erasing portions of the recorded programs which belong to an oldest time zone within the record-designated time zone and to a plurality of the record-designated channels, such that the storage capacity of the video recorder (16) or the external recording device (18) is not exceeded;
generating a recorded-program list (S32) displaying the programs of only the record-designated channels and the record-designated time zone, so that only programs having been recorded and programs being recorded are displayed; and
differentiating portions of erased programs in the course of erasing in the recorded-program list in a display manner;
wherein, when portions of programs among the recorded programs are automatically erased, displaying at least the non-erased portions of the programs in the course of erasing within the recorded-program list.

## Patentansprüche

1. Digitaler Rundfunkempfänger (1), umfassend eine Vielzahl von Tunern (3) zum kontinuierlichen und gleichzeitigen Aufnehmen einer Vielzahl von Programmen und einen Videorekorder (16), und konfiguriert zum:
- unter Verwendung des Videorekorders (16) oder einer externen Aufnahmevorrichtung (18), aus einer Vielzahl von Rundfunkprogrammen, Aufnehmen von Programmen einer Vielzahl von zur Aufnahme bestimmten Kanälen und einer zur Aufnahme bestimmten Zeitzone; und
- automatisches Löschen von Teilen der aufgenommenen Programme, die zur ältesten Zeitzone innerhalb der zur Aufnahme bestimmten Zeitzone und zu einer Vielzahl der zur Aufnahme bestimmten Kanäle gehören, so dass die Speicherkapazität des Videorekorders (16) oder der externen Aufnahmevorrichtung (18) nicht überschritten wird; und
einen Generator (22) einer Liste aufgenommener Programme, der konfiguriert ist, um eine Liste aufgenommener Programme zu generieren, welche nur die Programme der zur Aufnahme bestimmten Kanäle und der zur Aufnahme bestimmten Zeitzone anzeigt, so dass nur Programme, die aufgenommen wurden, und Programme, die aufgenommen werden, angezeigt werden,
wobei in der Liste aufgenommener Programme die Teile von gelöschten Programmen im Verlauf des Löschvorgangs durch die Art der Anzeige differenziert werden, und
wobei, wenn die Teile von Programmen aus den aufgenommenen Programmen automatisch gelöscht werden, die nicht gelöschten Teile der Programme im Verlauf des Löschvorgangs innerhalb der Liste aufgenommener Programme angezeigt werden.

2. Digitaler Rundfunkempfänger (1) nach Anspruch 1,
wobei in der Liste aufgenommener Programme ein Teil der aufgenommenen Programme, der kopiert oder verschoben wurde, von dem anderen Teil differenziert wird.

3. Digitaler Rundfunkempfänger (1) nach Anspruch 1, wobei, wenn der Teil des einen Programms aus dem aufgenommenen Programm automatisch gelöscht wird, sowohl der gelöschte Teil als auch der nicht gelöschte Teil des einen Programms angezeigt werden und dabei voneinander differenziert werden.

4. Digitaler Rundfunkempfänger (1) nach Anspruch 2, wobei in der Liste aufgenommener Programme zusätzlich zu den Programmen, die zu dem zur Aufnahme bestimmten Kanal gehören, Programme, die nicht zu dem zur Aufnahme bestimmten Kanal gehören, derart angezeigt werden, dass sie sich von den Programmen differenzieren, die zu dem zur Aufnahme bestimmten Kanal gehören.

5. Digitaler Rundfunkempfänger (1) nach Anspruch 3 oder 4, wobei in der Liste aufgenommener Programme nur ein Teil von ganzen Programmen, der zu der zur Aufnahme bestimmten Zeitzone gehört, angezeigt wird.

6. Verfahren zum Anzeigen von aufgenommenen Programmen, das auf einem digitalen Rundfunkempfänger (1) läuft, der eine Vielzahl von Tunern (3) zum kontinuierlichen und gleichzeitigen Aufnehmen einer Vielzahl von Programmen umfasst, wobei das Verfahren folgende Schritte umfasst:
- unter Verwendung des Videorekorders (16) oder einer externen Aufnahmevorrichtung (18), aus einer Vielzahl von Rundfunkprogrammen, Aufnehmen (S14) von Programmen einer Vielzahl von zur Aufnahme bestimmten Kanälen und einer zur Aufnahme bestimmten Zeitzone;
- automatisches Löschen von Teilen der aufgenommenen Programme, die zur ältesten Zeitzone innerhalb der zur Aufnahme bestimmten Zeitzone und zu einer Vielzahl der zur Aufnahme bestimmten Kanäle gehören, so dass die Speicherkapazität des Videorekorders (16) oder der externen Aufnahmevorrichtung (18) nicht überschritten wird;
- Generieren einer Liste aufgenommener Programme (S32), welche nur die Programme der zur Aufnahme bestimmten Kanäle und der zur Aufnahme bestimmten Zeitzone anzeigt, so dass nur Programme, die aufgenommen wurden, und Programme, die aufgenommen werden, angezeigt werden; und
- durch die Art der Anzeige Differenzieren von Teilen gelöschter Programme im Verlauf des Löschvorgangs in der Liste aufgenommener Programme;
- wenn Teile von Programmen aus den aufgenommenen Programmen automatisch gelöscht werden, Anzeigen mindestens der nicht gelöschten Teile der Programme im Verlauf des Löschvorgangs innerhalb der Liste aufgenommener Programme.

## Revendications

1. Récepteur de diffusion numérique (1) comprenant une pluralité de syntoniseurs (3) pour l'enregistrement continu et simultané d'une pluralité de programmes et un enregistreur vidéo (16) et configuré pour
enregistrer, à l'aide de l'enregistreur vidéo (16) ou d'un dispositif d'enregistrement externe (18), parmi une pluralité de programmes de diffusion, des programmes d'une pluralité de chaînes désignées pour l'enregistrement et d'une plage horaire désignée pour l'enregistrement ; et
l'effacement automatique de portions des programmes enregistrés qui appartiennent à une plage horaire plus ancienne dans la plage horaire désignée pour l'enregistrement et à une pluralité des chaînes désignées pour l'enregistrement, de sorte que la capacité de stockage de l'enregistreur vidéo (16) ou du dispositif d'enregistrement externe (18) ne soit pas dépassée ; et
un générateur de liste de programmes enregistrés (22) configuré pour générer une liste de programmes enregistrés affichant les programmes uniquement des chaînes désignées pour l'enregistrement et de la plage horaire désignée pour l'enregistrement, de sorte que seuls les programmes ayant été enregistrés et les programmes étant enregistrés soient affichés,
dans lequel, dans la liste de programmes enregistrés, les portions de programmes effacés en cours d'effacement sont différenciées d'une manière d'affichage, et
dans lequel, lorsque les portions de programmes parmi les programmes enregistrés sont effacées automatiquement, les portions non effacées des programmes en cours d'effacement sont affichées dans la liste de programmes enregistrés.

2. Récepteur de diffusion numérique (1) selon la revendication 1,
dans lequel, dans la liste de programmes enregistrés, une partie des programmes enregistrés qui a été soumise à une copie ou à un déplacement, est différenciée de l'autre partie.

3. Récepteur de diffusion numérique (1) selon la revendication 1,
dans lequel, lorsque la partie dudit un programme parmi le programme enregistré est effacée automatiquement, à la fois la partie effacée et la partie non effacée dudit un programme sont affichées tout en étant différenciées l'une de l'autre.

4. Récepteur de diffusion numérique (1) selon la revendication 2,
dans lequel, dans la liste de programmes enregistrés, en plus des programmes qui entrent dans la chaîne désignée pour l'enregistrement, des programmes qui n'entrent pas dans la chaîne désignée pour l'enregistrement sont affichés afin d'être différenciés des programmes qui entrent dans la chaîne désignée pour l'enregistrement.

5. Récepteur de diffusion numérique (1) selon la revendication 3 ou 4,
dans lequel, dans la liste de programmes enregistrés, uniquement une partie de tous les programmes qui entrent dans la plage horaire désignée pour l'enregistrement est affichée.

6. Procédé d'affichage de programme enregistré exploité dans un récepteur de diffusion numérique (1) comprenant une pluralité de syntoniseurs (3) pour l'enregistrement continu et simultané d'une pluralité de programmes, le procédé comprenant :
l'enregistrement (S14), à l'aide de l'enregistreur vidéo (16) ou d'un dispositif d'enregistrement externe (18), parmi une pluralité de programmes de diffusion, de programmes d'une pluralité de chaînes désignées pour l'enregistrement et d'une plage horaire désignée pour l'enregistrement ;
l'effacement automatique de portions des programmes enregistrés qui appartiennent à une plage horaire la plus ancienne dans la plage horaire désignée pour l'enregistrement et à une pluralité des chaînes désignées pour l'enregistrement, de sorte que la capacité de stockage de l'enregistreur vidéo (16) ou du dispositif d'enregistrement externe (18) ne soit pas dépassée ;
la génération d'une liste de programmes enregistrés (S32) affichant les programmes uniquement des chaînes désignées pour l'enregistrement et de la plage horaire désignée pour l'enregistrement, de sorte que seuls les programmes ayant été enregistrés et les programmes étant enregistrés soient affichés ; et
la différenciation de portions de programmes effacés en' cours d'effacement dans la liste de programmes enregistrés d'une manière d'affichage ;
dans lequel, lorsque des portions de programmes parmi les programmes enregistrés sont effacées automatiquement, l'affichage d'au moins les parties non effacées des programmes en cours d'effacement dans la liste de programmes enregistrés.
